# FASCICULE DE BREVET EUROPEEN

(11) **EP 0 981 277 B1**
(45) Date de publication et mention de la délivrance du brevet: **23.04.2003**
(21) Numéro de dépôt: 98913859.9
(22) Date de dépôt: 06.03.1998
(51) Int. Cl.: A01N 63/00

(54) **BIONEMATICIDE A ACTION OVICIDE EFFICACE CONTRE LES NEMATODES PHYTOPARASITES**
BIONEMATIZID MIT EFFIZIENTER OVIZIDER WIRKUNG GEGEN PHYTOPARASITÄRE NEMATODEN
BIONEMATICIDE WITH EFFICIENT OVICIDE ACTIVITY AGAINST PLANT-PARASITIC NEMATODES

(30) Priorité: 12.03.1997 FR 9703302
(43) Date de publication de la demande: 01.03.2000
(73) Titulaire: Societe Tunisienne D'Engrais Chimiques "S.T.E.C., Tunis (TN); Societe Expanci, 69200 Vénissieux (FR); B'Chir, Mohamed Mouldi, Tunis-Mahrajène (TN)
(72) Inventeur: B'CHIR, Mohamed, Mouldi, 1082 Tunis-Mahrajène (TN)
(74) Mandataire: Vuillermoz, Bruno
(86) Numéro de dépôt international: FR9800459
(87) Numéro de publication internationale: WO98039973

(56) Documents cités:
- WO-A-96/28031
- DATABASE WPI Derwent Publications Ltd., London, GB; AN 94-221722 XP002047701 IKKO SEIKI KK: "Nematocide contains Bacilus subtilis propagating in soil- and Bacillus thuringiensis producing regular twin pyramidal protein crystals by function of cells and spores during propagation" & JP 06 157 226 A
- DATABASE CABA SHARMA ET AL.: "Effect of seed treatment with delta-endotoxins of Bacillus spp. on the multiplication Heterodera glycines on soybean and corn" XP002047700 & NEMATOLOGICA BRASILEIRA, vol. 20, no. 2, 1996, pages 21-29,
- DATABASE WPI Derwent Publications Ltd., London, GB; AN 86-281586 XP002047702 TSUBAKI: "Nematocide culture contg. Bacillus sphaericus spores-used to prevent repeat cultivation disorders, pine whitering and to control spider mites" & JP 61 205 202 A

## Description

### 1. ASPECT TECHNIQUE DE L'INVENTION

Cette invention correspond à la mise au point d'un bionématicide spécifique vivant, à action essentiellement ovicide, déstiné à la lutte contre divers nématodes parasites et phytoparasites, sous serres et en pleins champs. Cette invention comporte aussi le procédé de production en masse, de formulation et d'application de ce produit.

Ce bionématicide est désigné sous la dénomination de :
**"NOVI-BIOTEC-7996" (N**ematodes **Ovi**cide for **Bio**control **Tec**hnology 19**79**/19**96).**

### 2. SITUATION DE L'INVENTION

### 2.1 Importance des nématodes phytoparasites

Les nématodes phytoparasites posent d'importants problèmes sur diverses cultures et dans différentes régions du monde. Dans les conditions méditerranéennes, les *Meloidogyne* spp. peuvent réduire la productivité des cultures sous serres de 10 à 80 p. 100 (Référence 1) B'CHIR M. M., Revue investisseur, APIA - Tunisie 17, 3-4 (1996). Les *Globodera* spp peuvent diminuer la production de la pomme de terre de 5 à 30 p. 100 (Référence 2) B'CHIR M. M. et KACHOURI N. Med. Fac. Landbouww. Univ. Gent, 59/1 25-36 (1992).

Plusieurs espèces de nématodes contribuent à réduire la durée de vie et la productivité des plantations arboricoles.

En absence des plantes hôtes, la conservation, des nématodes dans le sol, est plus ou moins longue. Les stades de conservation sont, essentiellement constitués par des oeufs, isolés ou plus ou moins protégés par une masse gélatineuse, sou bien par des kystes pouvant contenir plusieurs centaines d'oeufs.

### 2.2 Problématique de la lutte contre les nématodes phytoparasites.

La lutte contre les nématodes peut faire appel à différentes méthodes, autres que chimiques (Référence 3) BRIDGE J., Annual Reviews Phytopathologie 34, 201-221 (1996). Mais la lutte chimique est la plus courante et la commercialisation des substances chimiques, plus ou moins efficaces, a freiné en quelque sorte les investigations dans la recherche de méthodes alternatives. Ces méthodes, sont encore dans la plupart des cas, en dessous des espérances et leur efficacité ne dépasse guère celle d'un bon nématicide.

Néanmoins, les inconvénients de la lutte chimique sont multiples et on signale de plus en plus d'arrière-effets de produits nématicides non phytotoxiques (organophosphorés et carbamates). Les fumigants, comme le 1,3 DD, le metham sodium et surtout le bromure de méthyle, qui est beaucoup plus dangereux pour la couche d'ozone que le chlorofluorocarbones (CFC). Le bromure de méthyle sera retiré du commerce dans l'an 2010, selon les responsables des nations unies pour l'environnement.

La recherche de méthodes alternatives s'avère donc indispensable, elle est devenue le principal défi pour la plupart des pays du monde (Référence 4) NOLING J.W. et BECKER J.O., Journal of Nematology 26/4S, 573-586 (1994).

L'utilisation des variétés et des cultivars résistants aux nématodes a été considérée comme une solution alternative séduisante. Seulement, les nématodes sont, dans la plupart des cas, capables de contourner les gènes de résistance. La monoculture de ces variétés se traduit, dans la pratique, par l'apparition de pathotyges virulents. On est, alors le plus souvent, amené à protéger les cultivars résistants comme on le fait pour les variétés sensibles.

Les méthodes de lutte physique comme la "solarisation" (Référence 5) GAURH.S. & PERRY R.N., Nematological Abstracts 60/4, 153-167 (1991) et l'utilisation de l'eau chaude géothermique (Référence 1) sont, plus ou moins, efficaces dans la lutte contre les nématodes; cette efficacité est, cependant, très aléatoire et insuffisante. Il est souvent, plus indiqué de combiner ces facteurs physiques à d'autres méthodes, pour parfaire leur efficacité vis-à-vis des nématodes.

On peut classer, en deux catégories, les bionématicides appliqués dans la lutte contre les nématodes:
les substances bionématicides inertes, d'origine biologique comme l'ABG-9008 (Référence 6) WARRIOR P., REHBERGER L. A.et GRAU P. A., Journal of Nematology 27, 524-525 (1995).
les bionématicides vivants comme les " Nematophagous fungi composition " (Référence 7) SAMUELS K.D.Z. et al., PCT n° WO 94/28725, 1-41 (1994)

Mais pourquoi la lutte biologique n'a pas pu remplacer efficacement la lutte chimique? Avons-nous choisi les agents biologiques les plus performants? Est-ce que la lutte biologique est difficile à concevoir ou bien la question n'a pas été convenablement abordée ?

En tout état de cause, l'utilisation, des substances bionématicides inertes, peut poser, dans la pratique, les mêmes contraintes que celles de la lutte chimique (toxicité, rémanence, multiples applications...).

La conception de la lutte biologique, avec des bionématicides vivants, a fait l'objet de plusieurs travaux et brevets, dont les références (7) et (8): B'CHIR M. M., INPI n° 95 15687 (1995).

Les limites, de l'efficacité des champignons parasites des oeufs de nématodes, ont été présentées dans la référence (9) DE LEIJ F.A.A.M, Thèse Landbouw. Wageningen, 140 pp (1992).

### 2.3 Importance des bactéries comme agents de lutte contre les nématodes phytoparasites.

Les difficultés, de l'application pratique de *Pasteuria penetrans*, comme agent de lutte biologique contre les nématodes, sont essentiellement liées à l'adhérence spécifique des spores sur la cuticule des nématodes. L'apparition, d'une résistance acquise au niveau des populations de nématodes, préalablement traitées, limite les potentialités pratique de cet agent biologique.

Par ailleurs, les références les plus pertinentes, qui traitent de l'utilisation des bactéries du genre *Bacillus* comme agents de lutte biologique contre les nématodes, sont les suivantes:
(10) BOTTJER K.P. et al., Parasitology 60 239-244
(11) BONE L.W. et al., Exp. Parasit., 60 314-322.(1985)
(12) SINGH G.J.P. et al., J. Invert. Pathol., 155-166 (1986).
(13) EDWARDS et al., Europ. Patent Applic., EP-A-O 303-426 (1987).
(14) BOTTJER K.P. et BONE L.W., J. Nematol., 19 282-286 (1987).
(15) CHILCOTT C.N. et al., FEMS microbiol. Lett., 25 259-263 (1987).
(16) DAVIDSON E.W.et TITUS M., J. Invert. Pathol., 50 213-220 (1987).
(17) OSMAN G.Y., Helminth. Abstr.(B) 58 (4) 214 (1989)
(18) SCHAWAB G. E. et HALLORAN T.P., BREVET EP 352052 (1989).
(19) WHARTON D.A. et BONE L.W., Invert. Reprod. Devel., 15 155-158 (1989) (20) MEADOWS J. et al., J. Parasit., 75 191-194 (1989).
(21) POINAR G.O. et al., Ecosystems and Environment, 30 195-202 (1990)
(22) MEADOWS J. et al., Invert. Reprod. Devel., 17 73-76 (1990).
(23) RACKE J. et SIKORA R.A., Journ. Phytopath., 134(3) 198-208 (1992).
(24) RACKE J. et SIKORA R.A., Soil Biol.and Biochem., 24(6) 521-526 (1992).
(25) CHAHAL P.P.K. et CHAHAL V.P.S., Current Nematol. 4(2) 247 (1993)
(26) ADDISON J.A., Canadian Journal of Forest Research 23(11) 2329-2342 (1993)
(27) ZUCKERMAN B.M. et al., Biocontrol Science et Techn.,3 (1) 41-46 (1993).
(28) OKA Y et al.,Biocontrol Science et Techn.,3 (2) 115-126 (1993).
(29) GILL S.J. et al., Rev. Entom., 37 615-636 (1992).
(30) SHARMA R.D., Nematologia Brasileira, 18 79-84 (1994).
(31) LEYNS F. et al., Fundam. appl. Nematol., 18 211-218 (1995).
(32) BORGONIE G. et al., Journal of Invert.Pathol., 65(1) 61-67 (1995).
(33) BORGONIE G. et al., Fundam. Appl. Nematology, 19(4) 391-398 (1996).
(34) BORGONIE G. et al., Fundam. Appl. Nematology, 19(5) 407-414 (1996).
(35) BORGONIE G. et al., Fundam. Appl. Nematology, 19(6) 523-528 (1996).

Plusieurs espèces, du genre *Bacillus,* sont pathogènes pour les insectes et produisent des toxines insecticides, *B.thuringiensis* est l'espèce la plus utilisée dans la lutte biologique contre les insectes.

Par ailleurs, les références (10), (11), (14) et (19) ont montré que les toxines de *B.thuringiensis israelensis* peuvent tuer les oeufs des nématodes parasites d'animaux comme *Trichostrongylus colubriformis*. L'action de *B.t. israelensis* se manifeste par la dégradation de la cuticule des larves et/ou la coque de l'oeuf de *Trichostrongylus colubriformis*, ce qui entraîne la mort des nématodes. En outre, les références (12) et (15) ont montré que la toxine de *B.t. israelensis* (delta-endotoxine) agit et perturbe les muscles et le système nerveux des insectes. Cette caractéristique souligne la différence de l'effet des souches bactériennes de *B. thuringiensis* sur les nématodes et les insectes (Références 29, 31, 33, 34, 35).

Les références (17) et (25) montrent que les souches de *B.thuringiensis*, dont *kurstaki*, réduisent l'éclosion des oeufs de *Tylenchulus semipenetrans* et *Meloidogyne* spp.

La référence (20) a déterminé les facteurs qui conditionnent l'effet de la toxine de *B.thuringiensis kurstaki* sur les oeufs et les larves des nématodes parasites d'animaux.

La référence (18) protège une souche de *B.thuringiensis* déstinée à la lutte biologique contre les nématodes parasites d'animaux.

La référence (21) a testé l'effet combiné des nématodes parasites d'insectes et diverses souches de *B.thuringiensis* (*israelensis, kurstaki*) pour lutter contre les insectes. L'auteur montre que les nématodes devraient être appliqués au moins 24 heures avant les souches bactériennes pour éviter l'antagonisme bactéries-nématodes.

La référence (22) a montré l'effet de trois souches de *B.t.*(*israelensis, kurstaki* et *morrisoni* ) *sur Turbatrix aceti, B.t.israelensis* est la plus efficace.

La référence (13) protège une nouvelle souche de *B.thuringiensis* qui a une action sur les nématodes. La toxine de cette nouvelle souche agit directement sur les tissus intestinaux des nématodes. Cette souche a été étudiée en détail dans les références (33), (34), (35). Les cadavres des nématodes bactériophages peuvent constituer un milieu de prolifération des *B. thuringiensis* (Référence 32).

La référence (26) montre que l'effet de *B.thuringiensis* sur les microorganismes (invertébrés) du sol est variable.

Les références (27) et (30) signalent que certaines souches de *B.thuringiensis* peuvent être, plus ou moins, efficaces contre les nématodes phytoparasites comme *Meloidogyne* spp, *Rotylenchulus reniformis* et *Pratylenchus penetrans* sur diverses cultures hôtes, comme l'orge, la tomate, le piment et le fraisier.

Mais, étant donné le mode d'action et les conditions d'efficacité des souches de *B.thuringiensis* sur la paroi intestinale des nématodes et la possibilité d'apparition d'une résistance dans leurs populations, la référence (35) avance que les souches nématicides ne peuvent tenir les mêmes promesses que les souches ayant une action insecticide, en tant qu'agents de lutte biologique contre les nématodes.

La Référence (16) signale que *Bacillus sphaericus* agit aussi sur les cellules intestinales des insectes. Les références (23) et (24) montrent que *Bacillus sphaericus*, appliqué dans le sol, en association ou non à *agrobacterium radiobacter*, peut réduire le taux de reproduction des nématodes (*Glohodera pallida*) sur pomme de terre, tout en améliorant la productivité de cette culture. Ces bactéries limitent la pénétration des larves dans les racines de l'hôte.

La référence (28) montre que *Bacillus cereus* inhibe aussi la pénétration des larves de *Meloidogyne* spp dans les racines de tomate. L'effet nématicide serait lié à une augmentation du taux d'ammoniac dans le sol traité.

L'étude approfondie, de l'ensemble de ces références, montre que dans la plupart des cas, les tentatives d'application des *Bacillus* spp., comme agents biologiques, ont été réalisées avec une seule espèce ou souche, sans chercher l'action synergique d'une association binaire stable sur les oeufs, qui constituent le plus important stade de conservation des nématodes.

La référence (7) a montré l'efficacité d'une autre combinaison associant des champignons prédateurs et parasites de nématodes.

Cependant, le succès de l'application des champignons comme agents de lutte biologique contre les nématodes, est tributaire de la technique de leur formulation et de leur conservation.

### 2.4 Formulation et conservation des agents biologiques.

Les références (7) et (8) montrent que la production en masse des agents biologiques sur milieu liquide ne pose plus actuellement de problèmes majeurs.

Mais la formulation, des agents biologiques dans des boules d'alginate, réduit leur efficacité quand ils sont appliqués dans le sol (Référence 36) JAFFEE B. A. et al., Journal of Nematology 27(4) 504 et (Référence 37) ROBINSON A. F. et al., Journal of Nematology 27(4) 520 (1995).

La réussite commerciale des bionématicides, pour succéder aux nématicides de synthèse et/ou pour compléter leur champs d'action, est tributaire de leur efficacité, de leur facilité d'application et surtout l'absence d'effets secondaires en fin de cultures, comme l'augmentation du taux d'infestation des sols traités.

Le NOVI-BIOTEC-7996, objet de la présente demande de brevet invention, grâce à sa rémanence, est aussi efficace, sinon plus que les substances chimiques naturelles ou de synthèses disponibles sur le marché. Il présente, en outre, de grandes possibilités d'applications dans le domaine de la protection contre divers groupes nématodes parasites.

### 3.RESUME DE L'INVENTION

Cette invention concerne la composition, la production et la méthode d'application d'un bionématicide vivant comportant au moins deux souches bactériennes compatibles appartenant au genre *Bacillus*.

Le complexe bactérien (NOVI-BIOTEC-7996) a été sélectionné expérimentalement par une méthode culturale de 1979 à 1990. Le NOVI-BIOTEC-7996 comporte, préférentiellement au moins, une souche de *Bacillus thuringiensis* et une souche de *Bacillus sphaericus* compatibles, le complexe bactérien présente une action ovicide synergique à l'égard de diverses espèces de nématodes phytoparasites.

Le NOVI-BIOTEC-7996 peut être constitué, de préférence, de 50 à 80 p. 100 de *Bacillus sphaericus* et de 20 à 50 p. 100 de *Bacillus thuringiensis*.

Il est préférable de produire le NOVI-BIOTEC-7996 sur un milieu liquide naturel, à base d'extrait de graines de légumineuses et de saccharose comme source d'énergie, ou un milieu liquide de synthèse classique (Référence 8).

L'invention concerne aussi la méthode de formulation du NOVI-BIOTEC-7996 sous forme d'une suspension liquide, prête à l'emploi, ou sous forme de poudre mouillable à appliquer préférentiellement dans l'eau d'irrigation. En plus, l'invention montre la technique préférentielle pour un traitement biologique dans les conditions naturelles de différentes cultures afin d'obtenir une efficacité optimale.

Le NOVI-BIOTEC-7996, objet de cette invention, permet une protection hautement significative des cultures infestées par diverses espèces de nématodes, tout en évitant l'inconvénient d'un traitement classique, à savoir l'augmentation du taux d'infestation du sol en fin de culture.

### 4. DESCRIPTION DETAILLEE DE L'INVENTION (DETAILED DESCRIPTION OF THE INVENTION)

### 4.1 Mise en évidence et sélection des agents biologiques ayant action ovicide (NOVI-BIOTEC-7996).

La mise en évidence et la sélection des agents biologiques ont été réalisées au Mornag à 20 Km de Tunis, dans une serre de 60 mètres sur 8 Le sol à 20 % d'argile, était naturellement infesté par les trois espèces de *Meloidogyne* (*M. javanica, M. incognita* et *M. arenaris*). Les parcelles élémentaires ont été isolées en profondeur par un film plastique résistant. Dans toutes les parcelles expérimentales M. *incognita* domine les deux autres espèces.

4.1.1 Dans la première phase du protocole expérimental (1979-1985), quatre programmes, de rotations culturales, différents ont été conduits dans la serre (tableau 1).

**Tableau 1**

| Traitements | Abréviations | Répétitions |
|---|---|---|
| Monoculture de tomate sensible | SS | 6 |
| Alternance tomate sensible et résistante | SR | 6 |
| Alternance tomate résistante et sensible | RS | 6 |
| Monoculture de tomate résistante | RR | 6 |

Les traitements SS et SR ont été précédés, au cours des années 1979 et 1980, par deux cultures de tomate sensible, alors que les traitements RS et RR. ont été précédés par deux cultures successives de tomate résistante.

Le tableau 2 montre l'évolution de l'indice de galles, évalué en fin de cycle cultural (l'indice de galles représente le taux d'infestation potentiel des racines, il varie de zéro à cinq).

**Tableau 2**

| Evaluation de l'indice de galles moyen selon les traitements | | | | |
|---|---|---|---|---|
| Années | SS | SR | RS | RR |
| 1981 | 3,0 | 0,5 | 1,7 | 0,4 |
| 1982 | 3,5 | 2,7 | 0,0 | 0,0 |
| 1983 | 2,7 | 0,1 | 0,2 | 0,1 |
| 1984 | 1,8 | 1,2 | 1,7 | 0,0 |
| 1985 | 1,5 | 0,4 | 0,2 | 0,0 |

La différence entre les traitements peut s'expliquer par l'influence des différentes successions culturales sur le développement des nématodes dans les racines de la tomate.

La diminution progressive, du taux d'infestation des cultures, pourrait correspondre aussi à l'augmentation des antagonistes naturels dans le sol.

Dans les conditions de ce protocole expérimental, on n'a pas observé un développement important des pathotypes virulents, qui sont suceptibles de contourner les gènes de résistance des cultivars résistants.

4.1.2 Dans la deuxième phase du protocole expérimental (1986-1990), l'arrière-effet, des quatre différents programmes de cultures, a été évalué sur des cultures sensibles aux nématodes comme le melon et la tomate.

Durant cette deuxième phase (1986-90) et quel que soit l'hôte (melon ou tomate), on a pu distinguer deux groupes de traitements: d'une part les traitements SS et SR et d'autre part ceux qui correspondent à RS et RR.

Le tableau 3 montre l'arriêre-effet, des différentes combinaisons culturales sur le comportement de l'infestation, évalué sur une culture de tomate sensible (H63-5).

La progression de l'infestation, au cours du cycle cultural de la tomate, dans les parcelles du groupe RS et RR et celle du groupe SS et SR est statistiquement différente. L'altération du comportement des nématodes, a été constant, entre 1986 et 1990, dans les parcelles RR et RS.

**Tableau 3**

| Nématodes par gramme de racines de tomate (1988) | | | | |
|---|---|---|---|---|
| Périodes d'évaluation après plantation | SS | SR | RS | RR |
| 2 mois | 48a* | 32a | 12b | 17b |
| 3 mois | 1287a | 1643a | 125b | 91b |
| 4 mois | 1740a | 2440a | 515b | 230b |
| 5 mois | 3150a | 2520a | 820b | 570b |
| 7 mois (fin de culture) | 3750a | 5710a | 2190b | 1980b |

| | | | | |
|---|---|---|---|---|
| * Les valeurs affectées de la même lettre sont statistiquement comparables. | | | | |

Dans les parcelles RS et RR, l'infestation est plus tardive; tout se prise comme si certaines rotations culturales ont pu induire la formation d'un "sol résistant" aux nématodes.

Le tableau 4 présente la réaction de la tomate dans les différentes parcelles expérimentales.

**Tableau 4**

| Critères évalués sur la culture de tomate sensible (Fin de culture, 1988) | | | | |
|---|---|---|---|---|
| | SS | SR | RS | RR |
| Récolte cumulée | | | | |
| en Kg /m2 | 4,3a | 4,4a | 7,4b | 7,6b |
| Indice de vigueur | 2,5a | 3,0a | 3,4b | 3,5b |
| Indice de galles | 2,9a | 2,7a | 0,7b | 1,2b |

| Fécondité des femelles | | | | |
|---|---|---|---|---|
| oeufs/femelle | 124a | 117a | 102a | 112a |
| % d'éclosion des oeufs | 63a | 72a | 10b | 8b |
| % mortalité des oeufs | 21a | 19a | 72b | 68b |
| % diapause(oeufs non éclos) | 16a | 9a | 18a | 24a |

Malgré la présence des nématodes dans les parcelles RR et RS, leur effet sur la culture est insignifiant par rapport à celui observé dans les parcelles SS et SR (tableau 4).

L'importance de la mortalité des oeufs, dans ce cas, est liée au développement d'un complexe bactérien, ayant une action ovicide, dans le sol des parcelles RS et RR. Ces bactéries se sont révélées capables d'affecter la viabilité des oeufs, protégés dans leur masse gélatineuse, entre deux cycles culturaux successifs.

### 4.2 Identification des agents biologiques sélectionnés dans le sol

Les masses d'oeufs de *Meloidogyne* spp, infestés par les bactéries ovicides, sont prélevés dans les parcelles RS et RR et toutes les souches bactériennes associées à ces oeufs ont été isolées et purifiées sur un milieu gélosé enrichi.

Trois souches bactériennes, particulièrement actives contre les nématodes, ont été retenues. Ces souches, désignées BTA, BTB et BSM, ont été alors repiquées périodiquement, séparément et en associations binaires, sur le milieu solide nutrient-agar (Référence 8).

Les trois souches bactériennes sélectionnées appartiennent au genre *Bacillus*. Ces bactéries peuvent survivre à moins de zéro degré et à plus de 45°C. Leur développement est possible, sur milieux solides, liquides et dans la plupart des sols agricoles.

Le pH, du milieu de culture de ces bactéries, peut varier entre 6 à 8; mais devrait être de préférence entre 6 et 7,5.

La température de multiplication des bactéries ovicides peut varier de 8°C à 48°C, mais de préférence se situer entre 20°C et 35°C. La multiplication de ces bactéries est, particulièrement, stimulée par la présence des nématodes bactériophages comme *Pristionchus* n sp. (référence 8).

L'identification de ces souches bactériennes a été réalisée par l'analyse de leur composition en acides gras. Les profits qui en résultent ont permis d'identifier les souches BTA et BTB comme souches appartenant à l'espèce *Bacillus thuringiensis* et BSM comme une souche appartenant à l'espèce *Bacillus sphaericus.*

Les souches mères isolées ou en associations binaires sont conservées au congélateur à -20°C et en poudre lyophilisée à température ambiante dans de l'huile de paraffine.

### 4.3 Mode d'action et effet synergique des agents biologiques isolés.

L'effet, des trois souches BTA, BTB et BSM, a été étudié "in vitro" sur les différents stades de divers groupes de nématodes (phytoparasites et bactériophages).

Les nématodes, mis en présence des différentes souches ovicides, dans une goutte pendante, sur une lamelle couvre-objet, sont placés sur une lame à concavité remplie d'huile de paraffine. Cette préparation peut se conserver plusieurs semaines, sans risque d'altération. Elle peut être, périodiquement observée, photographiée ou filmée sous microscope à différents grossissements.

L'étude du mode d'action des bactéries a montré que les oeufs, au cours de leur développement embryonnaire, sont les plus sensibles à l'action des trois souches bactériennes. Les souches BTA et BSM sont compatibles et leur action ovicide est plus nette que celle de la souche BTB.

Les stades libres et les nématodes adultes sont beaucoup moins affectés que les oeufs par l'action de ces différentes souches bactériennes. *Pristionchus* n sp. peut même se nourrir et se développer sur les souches bactériennes cultivées sur milieu gélosé, particulièrement sur BTB. Les femelles de *Pristionchus* n sp. élevées sur BSM, présentent, le plus souvent, des populations bactériennes qui se développent au niveau des ovocytes à l'intérieur du tractus génital, pouvant même tuer une proportion importante d'oeufs avant leur développement.Les oeufs infestés contribuent à la dissémination des bactéries dans le milieu de cultures.

Les larves qui viennent d'éclore sont plus sensibles que les adultes à l'effet des bactéries.

Mais, les larves de "résistance" (Dauer larves) constituent le stade de développement le plus tolérant à l'action des bactéries. Ainsi, les nématodes bactériophages sont moins sensibles au NOVI-BIOTEC-7996 que les autres groupes de nématodes, tenant compte de leur grand potentiel biotique, la grande vitesse de leur développement embryonnaire et surtout l'existence d'un stade de résistance (Dauer larves) qui est protégé par une double paroi cuticulaire.

L'action du NOVI-BIOTEC-7996, objet de ce brevet n'est donc pas, essentiellement, liée à l'ingestion de toxines, qui détruisent ou désorganisent les tissus intestinaux des nématodes, comme c'est le cas de la plupart des références citées (Référence 10, 33,34 et 35). Nous pensons que la souche *B.thuringiensis* (BTA), qui rentre dans la composition du NOVI-BIOTEC-7996 est très particulière.

Les oeufs de *Pristionchus* n sp., espèce hermaphrodite protérandrique, se développent rapidement dans l'utérus, en moins de 12 heures à 23°C; dans le corps de l'adulte une grande proportion de ces oeufs échappent à l'effet ovicide des souches bactériennes BTA, BTB.

L'extraction des oeufs aux premiers stades de leur développement, après désinfection superficielle et dissection des femelles (hermaphrotides) de *Pristionchus* n sp., facilite l'étude de l'effet ovicide des souches BTA et BSM ainsi que de leur action combinée. (tableau 5).

**Tableau 5**

| Effet ovicide des souches BTA et BSM sur le pourcentage de mortalité des oeufs de *Pristionchus* n sp (48 heures). | | |
|---|---|---|
| BTA | BSM | BTA+BSM |
| 16,0 | 23,0 | 70,2 |
| 12,7 | 16,5 | 84,5 |
| 15,9 | 9,8 | 79,6 |
| 20,7 | 10,5 | 90,4 |
| 19,4 | 12,0 | 81,9 |
| 24,0 | 20,4 | 75,0 |
| 11,3 | 10,2 | 90,7 |

Le tableau 5 montre que, 48 heures après le traitement, l'action ovicide de la combinaison BTA+BSM est plus déterminante que celle de chacune des deux souches séparément. Mais 72 heures après le traitement, toutes les larves qui viennent d'éclore et tous les oeufs de *Pristionchus* n sp. sont tués par les suspensions bactériennes dans les trois cas.

L'action ovicide combinée des souches BTA et BSM (NOVI-BIOTEC-7996) sur les oeufs des nématodes est plus déterminante que celle de chacune des deux souches séparées. Cette action est plus spectaculaire sur les oeufs des nématodes phytoparasites, dont la durée du développement embryonnaire est plus longue. L'action ovicide, du NOVI-BIOTEC-7996, n'est donc pas spécifique à un groupe ou à une espèce particulière de nématodes.

Par ailleurs, le NOVI-BIOTEC-7996 ne montre pas un effet insecticide apparent sur les larves de Diptères (Drosophile) ni une activité acaricide sur les Gamasides.

Le tableau 6 montre l'incidence des bactéries ovicides sur la mortalité des oeufs de *Meloidogyne javanica*, deux (II) et trois semaines (III) après le traitement des masses d'oeufs.

L'efficacité, de l'action bionématicide des bactéries BTA et BSM sur les oeufs, est hautement significative, elle est cependant progressive. Seule une faible proportion des oeufs embryonnés (larves L2) peuvent éclore en présence des bactéries BTA et BSM.

**Tableau 6**

| Incidence de BTA, BTB et BSM " in vitro" sur le pourcentage de mortalité des oeufs de *Meloidogyne javanica.* | | | |
|---|---|---|---|
| Témoin II | BTA+BSM II | Témoin III | BTA+BSM III |
| 7,0 | 71,9 | 39,0 | 100,0 |
| 10,0 | 84,0 | 17,3 | 84,3 |
| 13,0 | 97,8 | 19,5 | 100,0 |
| 6,0 | 74,5 | 23,0 | 87,9 |
| 15,0 | 72,0 | 40,1 | 98,9 |
| 4,0 | 56,0 | 28,0 | 92,5 |

Trois semaines après le traitement tous les oeufs en cours de développement sont morts. La sensibilité des oeufs est liée à la précocité de leur infestation. Le mode d'action du NOVI-BIOTEC-7996, sur les oeufs de *Meloidogyne javanica*, a été étudié et filmé sous microscope. La souche BTA s'attaque à la coque de l'oeuf en s'activant autour des oeufs. 24 à 48 heures après l'infestation, la coque de l'oeuf est altérée, elle paraît plus ou moins poreuse et perméable et les bactéries y adhérent en masse.

Le contenu de l'oeuf devient de plus en plus turgescent au fur et à mesure de la cytolyse des blastomères. La vitesse de dégradation de la coque de l'oeuf est proportionnelle à la concentration de l'inoculum et à la température d'incubation.

Le développement embryonnaire s'arrête rapidement et, l'oeuf est soit envahi par la souche BSM qui se multiplient au niveau des blastomères en division, soit qu'il subit une cytolyse sans que les bactéries n'arrivent à traverser la coque.

Le tableau 7 montre l'action ovicide du NOVI-BIOTEC-7996 sur les oeufs des nématodes du genre *Globodera*.

Dans les kystes colorés, mûrs (Km), la plupart des oeufs ont terminé leur développement embryonnaire et contiennent chacun une larve du deuxième stade (L2) prête à éclore ou en diapause.

Les kystes blancs (Kb) renferment, par contre, surtout des oeufs au premier stade du développement embryonnaire.

**Tableau 7**

| Incidence du NOVI-BIOTEC-7996 sur la mortalité (en % par kyste) des oeufs de *Globodera* spp. " in vitro" | | | |
|---|---|---|---|
| Témoin Kb | Traité Kb | Témoin Km | Traité Km |
| 5 à 20% a | 90 à 99% b | 10 à 40% c | 20 à 45% c |
| *Les valeurs affectées de la même lettre sont statistiquement comparables. | | | |

La mortalité des oeufs dans les kystes a été évaluée trois semaines après le traitement. Dans les kystes mûrs, elle est statistiquement comparable à celle des kystes témoins non traités par le bionématicide.

La mortalité est, par contre, spectaculaire dans les kystes blancs ou le traitement au bionématicide a pu induire jusqu'à 99 p.100 de mortalité contre 20 p.100 seulement dans les kystes témoins. Cet essai confirme l'efficacité préférentiel du bionématicide sur les oeufs au cours du développement embroyonnaire. La mortalité des oeufs, dans les kystes mûrs, continue à croître, cependant, entre deux cycles de culture de pomme de terre, ce qui réduit considérablement le taux d'infestation des sols traités. Les kystes infestés perdent ainsi leur pouvoir infectant, après un stockage plus ou moins long à température ambiante.

L'extrait axénique des cultures bactériennes, obtenu par ultrafiltration à travers une membrane de 0,45 µm, n'a pas un effet nématicide et/ou une action ovicide significatifs.

Les bactéries BTA et BSM ou leurs extraits axéniques, ont-ils une incidence significative sur le mécanisme de l'éclosion des larves de nématodes dans les sols traités?

Une étude de l'effet du NOVI-BIOTEC-7996 sur le dérèglement du mécanisme d'éclosion des larves a été réalisé sur les nématodes du genre *Globodera*. Dans ce cas, l'éclosion des larves est essentiellement liée à la présence de la plante-hôte (pomme de terre). Plusieurs lots homogènes de Kystes de *G. rostochiensis* ont été traités avec des suspensions bactériennes des souches BTA et BSM et par leurs extraits axéniques, pendant 48 heures. Les taux d'éclosion des kystes traités ont été alors comparés à ceux des lots analogues de kystes témoins non traités.

La souche BTA a un effet plus durable sur l'altération du mécanisme d'éclosion des larves de *Globodera*. La souche BSM et les extraits axéniques des deux souches ne font que retarder, de quelques jours, le démarrage de l'éclosion des oeufs traités par rapport aux oeufs témoins non traités.

L'efficacité du NOVI-BIOTEC-7996 est donc liée à l'action conjointe des souches BTA et BSM qui forment le produit final. Si l'action de la souche BTA est déterminante, par son effet direct sur l'altération de la coque des oeufs et du mécanisme d'éclosion, celle de la souche BSM l'est par son action ovicide complémentaire.

### 4.4 Production en masse et conditionnement du NOVI-BIOTEC-7996

La production du bionématicide, objet de cette invention peut se faire sur milieu liquide agité dans un fermenteur classique de capacité variable.

Le milieu liquide de multiplication en masse du NOVI-BIOTEC-7996 peut être très simple, constitué des composantes suivantes par litre de milieu:

| | |
|---|---|
| - Graines de légumineuses | 60 grammes |
| - Carbonate de calcium | 20 grammes |
| - Saccharose | 30 grammes |

Le NOVI-BIOTEC-7996 peut être aussi produit sur un milieu liquide semi-synthétique, comme le milieu Czapeck Dox, dont la composition par litre est comme suit:

| | |
|---|---|
| - Nitrate de sodium | 31,20 g |
| - Chlorure de potassium | 00,78 g |
| - Glycerophasphate de magnésium | 00,78 g |
| - Sulfate ferreux | 00,02 g |
| - Sulfate de potassium | 00,55 g |
| - Saccharose | 30,00 g |

Les milieux liquides sont autoclavés à 115°C pendant 20 à 30 minutes.

Le temps nécessaire pour une fermentation complète est variable selon la capacité des fermenteurs et de la température de fermentation. Ces paramètres devraient être calculés, pour obtenir une fermentation rapide sans risque de contamination.

Le produit de la fermentation peut être utilisé, soit directement en formulation liquide, soit après lyophilisation, sous forme de poudre mouillable.

On peut ajouter à la matière active lyophilisée, un produit classique humectant et une charge neutre, pour faciliter l'application du NOVI-BIOTEC-7996 envisagée dans l'eau d'irrigation ou en poudrage.

La formulation liquide se conserve quelques mois entre 5°C et 8°C, alors que l'extrait sec peut se préserver plus d'une année, à température ambiante.

Avant (ou après) la lyophilisation du NOVI-BIOTEC-7996, on peut y ajouter 5 à 10 grammes de kaolin par litre; on obtient alors un extrait sec qu'on peut diluer dans de l'huile de paraffine; cette dilution peut être entreposée à température ambiante plusieurs années.

**Tableau 8**

| Variation de la quantité d'extrait sec obtenue après la lyophilisation de 100 ml de suspension de NOVI-BIOTEC-7996. | |
|---|---|
| Echantillons | Extraits secs en grammes |
| 1 | 5,30 |
| 2 | 5,32 |
| 3 | 7,08 |
| 4 | 5,52 |
| 5 | 4,54 |
| 6 | 3,48 |
| 7 | 4,52 |
| 8 | 5,72 |
| 9 | 6,30 |
| 10 | 4,78 |
| 11 | 5,38 |
| 12 | 6,15 |

Le tableau 8 montre la variation de la quantité d'extrait sec du NOVI-BIOTEC-7996, obtenue après la lyophilisation de 100 ml de suspension bactérienne sans kaolin.

Dix millilitres de suspension de BTA et BSM lyophilisée correspondent, en moyenne, à 0,53 grammes d'extrait sec.

### 5.EFFICACITE DU PRODUIT FINAL CONTRE DIVERS NEMATODES PHYTOPARASITES.

Le nouveau complexe bactérien, objet de ce brevet, est testé dans diverses conditions de cultures sous serres et en pleins champs pour lutter contre différents nématodes, d'intérêt économique, comme *Tylenchulus semipenetrans* sur citrus, *Globodera* spp. sur pomme de terre et *Meloidogyne* spp. sur cultures maraichères.

### 5.1 Efficacité du NOVI-BIOTEC-7996 sur citrus.

Un essai d'efficacité du NOVI-BIOTEC-7996 a été réalisé dans une jeune plantation de citronniers, greffés sur bigaradier naturellement infesté par *T.semipenetrans.*

Les arbres, âgés de Cinq ans, sont isolés dans des bacs cimentés de 2m³ chacun. Le NOVI-BIOTEC-7996 a été appliqué, en suspension liquide, au mois de mars, à la dose de 10 ml au m². Chaque traitement est répété 12 fois. L'évolution de l'infestation et de la production des citronniers, dans les parcelles traitées et dans les parcelles témoins non traitées, sont comparées sept mois aprês l'inoculation du NOVI-BIOTEC-7996.

Le tableau 9 montre les caractéristiques de l'infestation des jeunes citronniers, une semaine avant le traitement biologique. Les critères suivants de l'infestation ont été évalués par 20 grammes de racines :

| | |
|---|---|
| - Nombre d'oeufs | (W) |
| - Nombre de larves | (L2) |
| - Nombre de femelles | (F) |
| - Inoculum total | (W+L2) |
| - Taux d'éclosion en % | (% L2/W+L2) |
| - Infestation totale | (Inf/g) |
| - Fécondite des femelles | (W+L2/F) |

Ces résultats montrent que l'infestation, des arbres témoins et des arbres à traiter, est statistiquement comparable, une semaine avant l'application du NOVI-BIOTEC-7996.

Le tableau 10 montre l'effet du traitement au NOVI-BIOTEC-7996 sur l'évolution de l'infestation des citronniers, sept mois après l'application du produit biologique.

**Tableau 9**

| Caractéristiques de L'infestation des citronniers par *T. semipenetrans*, une semaine avant le traitement biologique. | | |
|---|---|---|
| Critères étudiés | Arbres témoins | Arbres à traiter |
| W | 11240 ± 3085 | 10118 ± 3976 |
| L2 | 5782 ± 1948 | 6706 ± 2446 |
| F | 127 ± 20 | 148 ± 25 |
| W+L2 | 17014 ± 4097 | 16706 ± 4890 |
| % L2/W+L2 | 32 ± 24 | 5 ± 6 |
| Inf/g | 17122 ± 4911 | 16706 ± 6431 |
| W+L2/F | 84 ± 27 | 83 ± 18 |

Le NOVI-BIOTEC-7996, qui fait l'objet de ce brevet d'invention, montre une efficacité hautement significative sur la réduction du taux d'infestation des arbres traités. Cette réduction, de l'infestation dans les parcelles traitées, n'est pas liée à une modification, ni du taux d'éclosion des oeufs (L2/W+L2), ni de la fécondité des femelles (W+L2/F). On a pu montrer, par une coloration spécifique au bleu de Meldola, que la mortalité des oeufs, dans les parcelles traitées avec le NOVI-BIOTEC-7996, dépasse 73 p.100; alors que celle des oeufs prélevés dans les parcelles témoins est très faible (< 1%).

**Tableau 10**

| Caractéristiques de l'infestation des citronniers par 20 grammes de racines (7 mois après le traitement). | | |
|---|---|---|
| Critères étudiés | Arbres témoins | Arbres traités |
| W | 15730 ± 3603 | 2100 ± 833 |
| L2 | 12317 ± 3860 | 2308 ± 811 |
| F | 1063 ± 683 | 161 ± 103 |
| W+Z2 | 28046 ± 7064 | 4408 ± 1554 |
| L2/W+L2 | 0,42 ± 0,04 | 0,45 ± 0,06 |
| Inf/g | 29109 ± 7281 | 4570 ± 1617 |
| W+L2/F | 92 ± 28 | 58 ± 20 |

Le tableau 11 montre la réaction des arbres traités au NOVI-BIOTEC-7996 par rapport aux arbres témoins. Les critères suivants ont été évalués sur chaque arbre, sept mois après le traitement biologique :

| | |
|---|---|
| - Nombre de rameaux /arbre | (N) |
| - Longueur des rameaux en cm | (L) |
| - Croissance totale en cm /arbre | (C.t) |
| - Production en Kg / arbre | (P.Kg/a) |

Si l'effet de l'intervention biologique a été spectaculaire sur la réaction végétative des jeunes citronniers traités, l'incidence de ce traitement sur leur production est, par contre, plus discrete; probablement à cause d'une infestation généralisée des arbres expérimentaux, en 1995, par la mineuse des feuilles d'agrumes, *Phyllocnitis citrella*, qui a pu masquer l'effet des nématodes sur les citrus dans les parcelles traitées et témoins.

**Tableau 11**

| Réaction des citronniers à l'application du NOVI-BIOTEC-7996, évaluée après sept mois du traitement. | | |
|---|---|---|
| Critères étudiés | Arbres témoins | Arbres traités |
| N | 26 ± 5 | 39 ± 3 |
| L | 20,7 ± 0,8 | 22,5 ± 1,8 |
| C.t | 527,5 ± 100,4 | 897,7 ± 114,0 |
| P. Kg/a | 3,16 ± 0,63 | 3,65 ± 0,44 |

### 5.2 Efficacité du NOVI-BIOTEC-7996 sur pomme de terre infestées par les nématodes à kystes.

En Tunisie, la pomme de terre peut être cultivée quatre fois par an (Primeur, extra-primeur, saison et arrière-raison), la culture de saison est cependant la plus importante. La date de plantation s'échelonne, dans ce cas, du mois de janvier au mois de mars et la récolte commence au mois de mai et s'achève en juillet.

L'étude de l'efficacité du NOVI-BIOTEC-7996 a été réalisée dans deux sols naturellement infestés par les deux espèces du genre *Globodera* (*G.rostochiensis* et *pallida*), dominée par *Globodera pallida* (74,5 ± 9,5 %).

Les essais ont été mis en place, en pots de grande capacité, contenant près de 8 Kg de sol chacun. Les caractéristiques suivantes de l'infestation des deux sols (SI et SII), sont présentées dans le tableau 12:

| | |
|---|---|
| - Nombre de kystes pleins par Kg de sol | (K/Kg) |
| - % de kystes vides | (% Kv) |
| - % de mortalité naturelle des oeufs | (% Mw) |
| - Nombre d'oeufs vivants par kyste | (Wv/K) |
| - dont % des oeufs en diapause | (% Kdia) |
| - dont % des oeufs éclos | (% Kec) |
| - Nombre d'oeufs vivants par g de sol | (Wv/g) |

La population initiale (Pi) de nématodes est différente dans les deux types de sols, le taux d'infestation du sol dépasse, dans les deux cas, la tolérance limite de la culture de pomme de terre, qui est évaluée à 10 oeufs vivants par gramme de sol.

**Tableau 12**

| Caractéristiques de l'infestation naturelle des sols expérimentaux par les *Globodera* spp. | | |
|---|---|---|
| Critères évalués | Sol I | Sol II |
| K/Kg | 94 ± 21 | 157 ± 18 |
| % Kv | 77,2 ± 1,8 | 33,8 ± 1,3 |
| % Mw | 10 ± 6 | 13,2 ± 4,8 |
| Wv/K | 120 ± 20 | 129 ± 17 |
| % Kdia | 84,8 ± 18,0 | 31,3 ± 12,8 |
| % Kec | 15,2 ± 11,4 | 68,7 ± 17,5 |
| Wv/g (Pi) | 11 ± 2 | 20 ± 3 |

Le traitement biologique avec le NOVI-BIOTEC-7996 a été réalisé à partir d'une combinaison binaire des souches BTA et BSM, cultivées sur milieu liquide à base d'extrait de graines de légumineuses (Référence 8). La suspension bactérienne est ensuite lyophilisée et conservée à température ambiante plus de 12 mois. Le produit final utilisé pour le traitement est obtenu en mettant en suspension 50 grammes d'extrait sec par litre d'eau d'irrigation. Le traitement biologique (Bio) est appliqué, dans les deux essais (E I et E II), à la dose de 1 g de NOVI-BIOTEC-7996 lyophilisé, soit l'équivalent de 20 ml de suspension bactérienne par pot.

Le NOVI-BIOTEC-7996 est comparé, d'une part à un traitement chimique (M) à l'éthoprophos (Mocap 10G) appliqué à la dose de 5 g par pot, soit l'équivalent de 10 g de Mocap par m2 et d'autre part à un témoin non traité (Tm). Les traitements ont été réalisés à la plantation, chaque traitement est répété 10 fois.

Les critères suivants ont été alors évalués en fin de culture, soit trois mois après la plantation :

| | |
|---|---|
| - Production en Kg par plant | (P. Kg/pl) |
| - Poids moyen des tubercules en g | (P. g/tb) |
| - Longueur moyenne des tiges en cm | (L/ti) |
| - Rapport poids tiges/racines | (Ti/rac) |
| - Kystes par 10 g de racines | (K/rac) |
| - Kystes blancs par 10 g de racines | (Kb/rac) |
| - Kystes mûrs par 10 g de racines | (Km/rac) |
| - Oeufs par kyste blanc | (W/Kb) |
| - Oeufs vivants par kyste blanc | (Wv/Kb) |
| - % de mortalité des oeufs (k.blancs) | (%M W/Kb) |
| - Oeufs par kyste mûr | (W/Km) |
| - Oeufs vivants par kyste mûr | (Wv/Km) |
| - % de mortalité des oeufs (k.blancs) | (%M W/Km) |
| - Oeufs vivants par g de racines | (Wv/g rac) |
| - Kystes par 10 g de sol | (K/sol) |
| - Oeufs par kyste dans le sol | (W/Ksol) |
| - Oeufs vivants par kyste dans le sol | (Wv/Ksol) |
| - % de mortalité des oeufs dans le sol | (%M W/Ksol) |
| - Oeufs vivants par gramme de sol | (Wv/gsol) |
| - Rapport entre la population finale et initiale des nématodes dans le sol | (Pf/Pi) |

Les tableaux 13 et 14 montrent les résultats des deux essais d'efficacité du NOVI-BIOTEC-7996 sur les nématodes du genre *Globodera* associés à une culture de saison de Pomme de terre (Variété "Spunta").

**Tableau 13**

| Efficacité du NOVI-BIOTEC-7996 (Bio) sur pomme de terre infestée par les *Globodera* spp. (Essai I) | | | |
|---|---|---|---|
| Critères évalués | Tm | M | Bio |
| P. Kg/pl | 0,43 ± 0,15 | 0,82 ± 0,17 | 0,67 ± 0,11 |
| P. g/tb | 59,2 ± 28,1 | 136,2 ± 33,2 | 137,5 ± 64,7 |
| L/ti | 65,0 ± 7,7 | 75,8 ± 5,6 | 71,6 ± 8,3 |
| Ti/rac | 7,3 ± 1,2 | 5,5 ± 0,7 | 5,6 ± 0,9 |
| K/rac | 18 ± 11 | 27 ± 7 | 12 ± 2 |
| Kb/rac | 4 ± 3 | 8 ± 4 | 4 ± 1 |
| Km/rac | 14 ± 9 | 19 ± 6 | 8 ± 2 |
| W/Kb | 91 ± 7 | 130 ± 17 | 75 ± 5 |
| Wv/Kb | 66 ± 6 | 66 ± 15 | 37 ± 7 |
| %M W/Kb | 28,6 ± 7,8 | 49,2 ± 11,0 | 53,4 ± 5,5 |
| W/Km | 116 ± 20 | 131 ± 12 | 102 ± 9 |
| Wv/Km | 93 ± 18 | 90 ± 7 | 87 ± 12 |
| %M W/Km | 19,8 ± 9,7 | 31,9 ± 8,4 | 14,7 ± 11,0 |
| Wv/g rac | 167 ± 102 | 223 ± 49 | 96 ± 22 |
| K/sol | 84 ± 19 | 81 ± 12 | 65 ± 13 |
| w/Ksol | 127 ± 18 | 119 ± 6 | 142 ± 21 |
| Wv/Ksol | 88 ± 12 | 93 ± 8 | 75 ± 4 |
| %M W/Ksol | 29,4 ± 2,9 | 20,5 ± 5,4 | 44,7 ± 3,8 |
| Wv/gsol | 202 ± 22 | 232 ± 18 | 128 ± 5 |
| Pf/Pi | 18,3 ± 2,8 | 21,1 ± 7,4 | 11,6 ± 3,1 |

L'analyse statistique des données de l'essai I et II montre que le traitement biologique au NOVI-BIOTEC-7996 lyophilisé à la dose de 1 g par pot est, au moins aussi efficace que le traitement au Mocap 10G à la dose de 5 g par pot.

Dans l'essai I et II, l'effet des traitements, chimique (M) et biologique (Bio), se traduit par une amélioration significative de la production de la pomme de terre, par rapport au témoin non traité (Tm).

Les deux traitements (chimique, M et biologique, Bio) présentent un mode d'action différent sur les nématodes du genre *Globodera*.

L'éthoprophos (Mocap), qui agit essentiellement sur les larves à la plantation, retarde l'infestation de la culture, ce qui se traduit par une réduction de la compétition entre les larves, au niveau du système radiculaire des plants de pomme de terre traités. La réduction de cette compétition explique la tendance plus ou moins nette de l'augmentation du taux d'infestation des racines en fin de culture. Après le traitement chimique (M), l'augmentation du nombre de kystes dans les racines (K/rac), surtout les kystes mûrs (Km/rac), par rapport au témoin (Tm), est plus ou moins associée à une augmentation du pourcentage de mortalité des oeufs dans les kystes prélevés sur les racines et dans le sol (% M W/Kb, %M W/Km et %M Wsol).

Le NOVI-BIOTEC-7996 (Bio), qui agit, beaucoup plus, sur les oeufs de nématodes, avant éclosion, ne montre pas la même tendance à l'augmentation du taux d'infestation du système radiculaire, en fin de culture comme c'est le cas du traitement chimique (M).

Le traitement au NOVI-BIOTEC-7996 (Bio) augmente la mortalité des oeufs, presque aussi nettement que l'éthoprophos (%M W/Rb, %M W/Km et %M W/Rsol). De plus, le pourcentage, de mortalité des oeufs dans les kystes provenant des sols traités au NOVI-BIOTEC-7996, peut augmenter considérablement entre deux cycles culturaux de pomme de terre.

**Tableau 14**

| Efficacité du NOVI-BIOTEC-7996 (Bio) sur pomme de terre infestée par les *Globodera* spp. (Essai II) | | | |
|---|---|---|---|
| Critères évalués | Tm | M | Bio |
| P. Kg/pl | 0,77 ± 0,18 | 1,05 ± 0,24 | 1,30 ± 0,30 |
| P. g/tb | 81,4 ± 7,6 | 110,5 ± 8,3 | 131,6 ± 11,4 |
| L/ti | 85,6 ± 8,7 | 94,2 ± 29,7 | 87,4 ± 9,6 |
| Ti/rac | 8,7 ± 1,0 | 8,7 ± 1,1 | 5,6 ± 1,9 |
| K/rac | 57 ± 22 | 67 ± 10 | 43 ± 13 |
| Kb/rac | 11 ± 4 | 10 ± 3 | 8 ± 3 |
| Km/rac | 45 ± 19 | 58 ± 12 | 34 ± 13 |
| W/Kb | 135 ± 24 | 97 ± 11 | 91 ± 9 |
| Wv/Kb | 91 ± 12 | 49 ± 3 | 67 ± 8 |
| %M W/Kb | 29,2 ± 5,6 | 48,2 ± 4,5 | 24,7 ± 7,9 |
| W/Km | 136 ± 10 | 94 ± 4 | 131 ± 12 |
| Wv/Km | 109 ± 7 | 56 ± 10 | 86 ± 9 |
| %M W/Km | 19,4 ± 2,5 | 41,3 ± 10,3 | 32,6 ± 8,3 |
| Wv/g rac | 631 ± 253 | 352 ± 121 | 342 ± 139 |
| K/sol | 26 ± 3 | 13 ± 4 | 22 ± 2 |
| W/Ksol | 132 ± 6 | 266 ± 43 | 144 ± 7 |
| Wv/Ksol | 107 ± 5 | 179 ± 34 | 89 ± 8 |
| %M W/Ksol | 18,5 ± 1,3 | 30,5 ± 3,6 | 38,2 ± 3,6 |
| Wv/gsol | 283 ± 41 | 234 ± 40 | 198 ± 25 |
| Pf/Pi | 15,3 t 3,0 | 12,9 ± 3,2 | 10,4 ± 1,8 |

Après un traitement biologique au NOVI-BIOTEC-7996 (Bio), le nombre d'oeufs vivants, dénombrés par gramme de sol (Wv/gsol) et le taux de multiplication des nématodes (*Globodera*), au cours du cycle cultural (Pf/Pi), diffèrent statistiquement de ceux correspondant, à la fois au témoin (Tm) ou au traitement chimique à l'éthoprohos (M).

Les Kystes infestés provenant des sols traités perdent plus de 99 p.100 de leur viabilité, après une conservation, de trois années à la température ambiante, par rapport à ceux maintenus continuellement dans une chambre froide à 5°C.

Contrairement à un traitement chimique classique, le traitement au NOVI -BIOTEC-7996 entraîne donc, non seulement, une amélioration significative de la production, mais aussi une réduction du taux d'infestation du sol.

L'utilisation judicieuse de ce produit biologique contre les *Globodera* spp., peut ainsi s'inscrire dans le cadre d'une stratégie d'intervention intégrée qui évite l'aggravation de l'infestation du sol par les nématodes, après chaque cycle cultural de la pomme de terre.

### 5.3 Efficacité du NOYI-BIOTEC-7996 sur les cultures sous serres infestées par les Meloidogyne spp.

Les nématodes du genre *Meloidogyne* sont polyphages, s'attaquant à plusieurs cultures ornementales, fruitières et maraîchères sous serres et en pleins champs. Les espèces, qui présentent la plus grande importance économique, sont *M. javanica, M. arenaria, M. incognita, M.* *hapla* et *M. chitwoodi*, une nouvelle espèce, particulièrement nuisible sur pomme de terre.

L'importance économique des *Meloidogyne* est très variable selon les systèmes de cultures. D'une façon générale, on constate, en outre, que les dégâts causés par les *Meloidogyne* sont très élevés sur les cultures conduites sous serres chauffées en hors sol ou dans le sol.

Plus de 50 % des nématicides commercialisés le marché mondial sont destinés à combattre les *Meloidogyne* et l'essentiel des traitements sont appliquées sur cultures maraîchères.

L'évaluation d'une méthode de lutte contre les *Meloidogyne*, dans le cadre d'un programme d' intervention intégrée, tient compte des critères suivants:
- L'évaluation de la population initiale des nématodes (Pi) dans les parcelles expérimentales (degré d'infestation).
- L'évaluation des nématodes en cours de culture (Ec) selon les traitements.
- L'évaluation de la population finale des nématodes (Pf).
- L'étude de la qualité de l'inoculum résiduel selon les traitements (% de mortalité de diapause et d'éclosion....)
- L'estimation de la réaction de la culture à l'infestation (Indice de galles, Indice de vigueur, % de racines infestées...)
- L'étude comparée de la productivité de la culture par rapport a un traitement de référence et un témoin non traité.

Le NOVI-BIOTEC-7996 a été testé dans les conditions naturelles de diverses cultures maraîchères sous serres chauffées, où les *Meloidogyne* spp. sont particulièrement virulents et préjudiciables. Dans ces conditions, cinq essais ont été mis en place dans différentes régions de cultures sous serres chez des agriculteurs privés en Tunisie.

### 5.3.1 Efficacité du NOVI-BIOTEC-7996 sur une culture de concombre d'arrière-saison infestée par les Meloidogyne (Essai I)

L'essai I a été réalisé sur une culture de concombre d'arrière-saison, dit "Fakous: vert d'Armenie", qui occupe le sol trois mois. Le semis du concombre est réalisé en place, au début du mois d'août; cette culture est conduite sous serre chauffée, en hors sol, sur un substrat, isolé du sol par un film plastique. Le substrat, constitué à base de sable filtrant naturellement infesté par les nématodes (*M.javanica*), est placé dans des fossés de 40 cm de profondeur, et irrigué périodiquement avec une solution fertilisante de pH 6 à 7.

Dans cet essai I, on a comparé le traitement au NOVI-BIOTEC-7996 (Bio) à un témoin non traité (Tm) et à un traitement physique à l'eau chaude (H2O). Le NOVI-BIOTEC-7996 est utilisé en formulation liquide à la dose de 10 ml par m2. Le produit biologique est incorporé au substrat humidifié, un mois avant le semis. Le traitement physique du sol, à l'eau chaude d'origine géothermique, a permis de le maintenir à la température de 52°C pendant 4 heures et entre 48 et 50°C pendant plus de 20 heures. Chaque traitement est répété 8 fois; les parcelles élémentaires mesurent chacune 6,5 m2.

Les critères expérimentaux suivants ont été alors évalués en cours et en fin de culture dans l'essai I:

| | |
|---|---|
| - Production en Kg par m2 | (P. Kg/m2) |
| - Indice de galles (de 0 à 5) | (IG) |
| - Nématodes par gramme de racines | (N/g rac) |
| - Oeufs par gramme de racines | (W/g rac) |
| - Larves par gramme de racines | (L2/g rac) |
| - Femelles par 10 grammes de racines | (F/10g rac) |
| - Mâles par 10 grammes de racines | (M/10g rac) |
| - Nématodes par plant en cours de culture | (P.Ec/Pl) |
| - Bactériophages par gramme de racines | (B/g rac) |
| - Fécondité apparente des femelles | (W+L2/F) |
| - % de racines infestées | (% R inf) |
| - Population finale par gramme de racines | (Pf/g rac) |
| - Log (Population finale par plant + 1) | (loq Pf+1) |
| - Inoculum potentiel par gramme de sol | (W/g sol) |
| - Rapport Pf/P.Ec par plant | (Pf/P.Ec) |

Le tableau 15 montre l'effet comparé des traitements sur l'infestation des racines de concombre, un mois après le semis.

Un mois après le semis de concombre, seul le traitement à l'eau chaude s'est traduit par une réduction significative apparente du taux d'infestation de la culture.

Le tableau 16 montre l'effet des différents traitements en fin de culture, soit 3 mois après le semis.

Les résultats évalués, en fin de culture, montrent que le traitement biologique au NOVI-BIOTEC-7996 protège la culture de concombre d'arrière saison, autant que le traitement physique à l'eau chaude, en améliorant significativement sa production par rapport au témoin non traité.

**Tableau 15**

| Effet des traitements sur l'infestation du concombre par *M. javanica* (Essai I, en cours de culture) | | | |
|---|---|---|---|
| Critères évalués | Tm | H2O | Bio |
| IG | 1,2 ± 0,3 | 0,9 ± 0,3 | 1,0 ± 0,4 |
| N/g rac | 434 ± 262 | 154 ± 22 | 580 ± 313 |
| P.Ec/Pl | 2659 ± 1841 | 896 ± 134 | 3941 ± 3003 |

Mais, contrairement au traitement du sol à l'eau chaude, le traitement biologique au NOVI-BIOTEC-7996 (Bio) contribue, en plus, à une réduction hautement significative des populations de nématodes (*M. javanica*) dans les racines (Pf/g rac, W/g rac, L2/g rac, F/10g rac, M/10g rac et log Pf+1) et dans le sol (W/g sol) par rapport au témoin non traité.

**Tableau 16**

| Efficacité du NOVI-BIOTEC-7996 (Bio) sur une culture de concombre infestée par *M. javanica* (Essai I, fin de culture) | | | |
|---|---|---|---|
| Critères évalués | Tm | H2O | Bio |
| P. Kg/m2 | 2,7 ± 4,0 | 3,4 ± 0,1 | 3,5 ± 0,2 |
| IG | 1,8 ± 0,1 | 1,1 ± 0,2 | 0,8 ± 0,1 |
| % R inf | 20,5 ± 0,3 | 21,7 ± 1,5 | 13,4 ± 0,7 |
| Pf/g rac | 132 ± 29 | 232 ± 95 | 26 ± 5 |
| W/g rac | 59 ± 13 | 52 ± 44 | 15 ± 3 |
| L2/g rac | 73 ± 18 | 180 ± 52 | 10 ± 3 |
| F/10g rac | 9 ± 1 | 9 ± 4 | 2 ± 1 |
| M/10g rac | 7 ± 2 | 15 ± 8 | 6 ± 1 |
| W+L2/F | 153 ± 38 | 262 ± 76 | 171 ± 33 |
| log Pf+1 | 3,28 ± 0,11 | 3,55 ± 0,17 | 2,7 ± 0,14 |
| B/g rac | 134 ± 17 | 120 ± 18 | 34 ± 9 |
| W/g sol | 51 ± 14 | 92 ± 20 | 19 ± 6 |
| Pf/P.Ec | 47,5 ± 32,2 | 144,4 ± 109,6 | 4,5 ± 2,8 |

Le traitement au NOVI-BIOTEC-7996 montre aussi un effet significatif sur les populations de nématodes bactériophages dénombrés dans les racines (B/g rac).

Le rapport du niveau de la population de nématodes par plant, dénombrée en cours de culture (P.Ec) et en fin de culture (Pf), est trois fois plus important, dans les parcelles traitées à l'eau chaude par rapport à celui relevé dans les parcelles témoins non traités; ce rapport est 10 fois moins élevé dans les parcelles traitées au NOVI-BIOTEC-7996.

L'augmentation des populations de nématodes, en fin de culture, dans les parcelles traitées à l'eau chaude (H2O), peut s'expliquer par l'effet secondaire de ce traitement physique sur les autres microorganismes, antagonistes aux nématodes, dans le sol et/ou par le décalage de la chronologie de l'infestation par rapport au développement du système radiculaire des plantes hôtes. Dans les parcelles traitées à l'eau chaude le pourcentage des racines infestées (% R inf) est, en effet, le plus élevé.

Le traitement du sol au NOVI-BIOTEC-7996 (Bio), un mois avant le semis, à la dose de 10 ml par m2, entraine donc, non seulement, une amélioration significative de la production d'une culture de concombre d'arrière saison infestée par *M. javanica*, mais contribue aussi à la réduction significative du taux d'infestation du sol, contrairement au traitement physique à l'eau chaude (H2O) et au témoin non traité (Tm). Quelle serait alors l'incidence de cet effet sur une culture de tomate conduite dans la même serre juste après le concombre?

### 5.3.2 Efficacité du NOVI-BIOTEC-7996 sur une culture de tomate d'extra-primeur infestée par les Meloidogyne (Essai II)

L'essai II a été réalisé sur une culture de tomate, d'extra-primeur, dans la même serre, à la suite de l'essai I, juste après la culture de concombre.

L'objectif de l'essai II est donc d'étudier, l'arrière-effet des traitements au NOVI-BIOTEC-7996 (Bio) et à l'eau chaude (H2O) sur une deuxième culture, conduite dans la même serre, précédemment cultivée en concombre. Cet essai II a aussi pour but l'évaluation de l'efficacité d'un bionématicide à base de champignons prédateurs et de leurs bactéries associées, objet de la demande de brevet INPI n° 95 15687, désigné (Chp).

La culture de tomate, qui a été semée en place à la fin du mois d'octobre a occupé la serre neuf mois. Il s'agit d'un hybride F1 (CENCARA), normalement résistant aux *Meloidogyne*. Etant donné la fréquence des pathotypes virulents, dans la région, ce cultivar résistant se comporte, tout à fait, comme une variété sensible vis-à-vis des nématodes.

L'essai, comporte donc quatre traitements, répétés chacun quatre fois.

Les arrière-effets, du traitement biologique (Bio) et du traitement physique (H2O), sont alors comparés, à celui du témoin non traité (Tm) et à l'incidence d'un deuxième traitement biologique (Chp), applique, à la dose de 20 ml par m2, un mois après le semis de la culture de tomate.

Le tableau 17 montre l'effet comparé des traitements sur l'infestation des racines de tomate, en cours de culture, soit 4 mois après le semis.

A 4 mois du semis, le taux d'infestation des plants de tomate est comparable dans les parcelles témoins (Tm) et celles préalablement traitées à l'eau chaude (H2O).

L'arrière-effet du NOVI-BIOTEC-7996 (Bio) et l'effet sur les nématodes du deuxième traitement biologique à base de champignons prédateurs (Chp), sont hautement significatifs. Les deux traitements biologiques sont donc statistiquement comparables et nettement différents du témoin non traité (Tm) et du traitement physique à l'eau chaude (H2O).

**Tableau 17**

| Effet des traitements sur l'infestation de la tomate par *M. javanica* (Essai II, en cours de culture) | | | | |
|---|---|---|---|---|
| Critères évalués | Tm | H2O | Bio | Chp |
| IG | 1,1 ± 0,2 | 0,8 ± 0,2 | 0,1 ± 0,1 | 0,1 ± 0,1 |
| N/g rac | 76 ± 41 | 55 ± 22 | 5 ± 3 | 7 ± 5 |
| P.Ec/Pl | 3099 ± 1711 | 2443 ± 927 | 255 ± 190 | 308 ± 215 |

Le tableau 18 montre l'incidence des différents traitements en fin de culture, soit 9 mois à partir du semis.

En fin de culture, les critères suivants ont été étudiés, en plus de ceux évalués dans l'essai I :

| | |
|---|---|
| - Indice de vigueur de la culture, | |
| qui varie de zéro à quatre | (IV) |
| - % de mortalité des oeufs | (% M W) |
| - % de mortalité des larves | (% M L2) |
| - % de diapause embryonnaire | (% Dia) |
| - log(de l'inoculum vivant + 1) | (log Pv+1) |

Le traitement au NOVI-BIOTEC-7996, appliquée deux mois avant le semis, a permis une protection efficace de deux cultures : la culture de concombre d'arrière-saison et la culture de tomate d'extra-primeur (Tableau 18).

La production de la culture de tomate (P. Kg/m2), dans les parcelles traitées au NOVI-BIOTEC-7996 (Bio), a augmenté de 75,8 % par rapport aux parcelles témoins non traitées (Tm) et celles préalablement traitées à l'eau chaude (H2O).

**Tableau 18**

| Efficacité du NOVI-BIOTEC-7996 (Bio) sur une culture de tomate infestée par *M. javanica* (Essai II, fin de culture) | | | | |
|---|---|---|---|---|
| Critères évalués | Tm | H2O | Bio | Chp |
| P.Kg/m2 | 28,2 ± 0,9 | 30,1 ± 1,6 | 49,6 ± 1,1 | 49,5 ± 1,0 |
| IV | 1,8 ± 0,3 | 1,2 ± 0,2 | 2,7 ± 0,1 | 2,9 ± 0,1 |
| IG | 2,4 ± 0,4 | 2,8 ± 0,2 | 0,8 ± 0,1 | 1,3 ± 0,2 |
| % R inf | 65,5 ± 2,5 | 50,7 ± 4,6 | 11,5 ± 1,1 | 12,0 ± 2,6 |
| Pf/g rac | 2274 ± 1775 | 4244 ± 514 | 116 ± 25 | 118 ± 33 |
| W/g rac | 1102 ± 923 | 2767 ± 403 | 67 ± 12 | 75 ± 17 |
| % M W | 46,4 ± 3,5 | 31,2 ± 2,6 | 57,8 ± 2,7 | 43,7 ± 6,0 |
| % Dia | 53,6 ± 1,9 | 68,8 ± 2,9 | 42,2 ± 6,5 | 56,3 ± 3,7 |
| L2/g rac | 1115 ± 1006 | 1475 ± 320 | 46 ± 16 | 43 ± 11 |
| % M L2 | 29,3 ± 2,2 | 27,8 ± 2,7 | 36,8 ± 2,9 | 48,8 ± 7,9 |
| F/10g rac | 150 ± 110 | 283 ± 62 | 6 ± 2 | 8 ± 2 |
| W+L2/F | 96 ± 24 | 155 ± 10 | 207 ± 26 | 154 ± 20 |
| log Pf+1 | 4,45 ± 0,34 | 5,39 ± 0,05 | 3,14 ± 0,15 | 2,85 ± 0,29 |
| Pf/P.Ec | 25,4 ± 7,8 | 121,0 ± 26,0 | 3,8 ± 2,7 | 3,7 ± 1,3 |
| log Pv+1 | 3,96 ± 0,32 | 4,71 ± 0,14 | 2,05 ± 0,19 | 2,82 ± 0,11 |

Le deuxième traitement biologique à base de champignons prédateurs (Chp), appliqué un mois après le semis en place de la tomate, a permis l'augmentation de la production de cette culture dans les mêmes proportions que le traitement (Bio). Cette amélioration de la productivité de la culture de tomate est liée à une diminution significative des populations de nématodes évaluées, soit indirectement par la réaction de la culture (IV, IG et % R inf), soit directement par le dénombrement des nématodes dans les racines de 1' hôte (Pf/g rac, W/g rac, L2/g rac, F/10g rac et Log Pf+1).

Au cours du cycle cultural, les deux traitements biologiques (Bio et Chp) ont réduit, de façon significative, le taux de multiplication des nématodes dans les racines de la tomate (Pf/P.Ec), de plus de 6 fois par rapport au témoin non traité (Tm); alors que ce taux a été multiplié environ par cinq dans les parcelles préalablement traitées à l'eau chaude (H2O).

Le mode d'action du NOVI-BIOTEC-7996 (Bio) et celui du deuxième bionématicide à base de champignons prédateurs (Chp) sont cependant très différents. Alors que le NOVI-BIOTEC-7996 (Bio) agit essentiellement sur la mortalité des oeufs (% M W), le Bionématicide (Chp) détermine principalement la mortalité des larves (% M L2). Le taux d'infestation potentielle résiduelle (log Pv+1), le plus élevé, a été relevé dans les parcelles traitées à l'eau chaude (H2O), où le pourcentage des oeufs en diapause est aussi le plus important (% Dia).

La compétition trophique intraspécifique dans les racines peut expliquer la différence de la fécondité apparente des femelles (W+L2/F) entre les traitements. L'importance de cette compétition interspécifique est, elle-même, liée à la chronologie de l'infestation selon les traitements.

L'essai II a donc permis de confirmer l'efficacité du bionématicide, objet de la demande de brevet INPI n°95 15687 du 22 décembre 1995; il a montré aussi la grande rémanence d'un traitement au NOVI-BIOTEC-7996, qui peut protéger deux cultures successives conduites sur le même sol.

Quel serait le degré de l'efficacité de l'application combinée de ces deux produits biologiques sur les nématodes?

### 5.3.3 Efficacité du NOVI-BIOTEC-7996 sur une culture de piment d'extra-primeur infestée par les Meloidogyne (Essai III)

L'essai III a été réalisé sur une culture de piment extra-primeur, infestée par *M. javanica,* conduite, en hors sol, dans une serre chauffée, dans les mêmes conditions expérimentales que l'essai II.

Le piment, hybride F1 ( CHAAMBI, dit "B26"), est semé en place au début du mois d'octobre, après un repos estival de deux mois, pendant lequel on a testé l'effet de la solarisation du sol (S) au cours des mois d'août et de septembre. Ce traitement physique consiste à irriguer le sol et à le couvrir par un film plastique. La température du sol ne dépasse guère 48°C, mais l'effet conjugué de ce facteur et de l'humidité favorisent l'éclosion des oeufs de nématodes dans le sol en absence d'hôte. La solarisation épuise, ainsi progressivement l'inoculum potentiel du sol et réduit son taux d'infestation.

L'effet de la solarisation est donc comparé, dans cet essai III, à celui du traitement biologique au NOVI-BIOTEC-7996, appliqué à la dose de 20 ml de suspension bactérienne (BTA et BSM) au m2. Ce produit biologique est appliqué, dans cet essai, deux mois après le semis de la culture de piment.

Par ailleurs, la solarisation (S) et le traitement biologique (Bio) sont comparés à un témoin non traité (Tm) et à un traitement chimique à l'ethoprophos liquide (M), appliqué trois mois après le semis à la dose de 5 ml au m2.

Les parcelles élémentaires mesurent 13 m2 et chaque traitement est répété 4 fois.

Les critères, estimés en cours et en fin de la culture du piment, sont les mêmes que ceux évalués dans l'essai I et II.

Le tableau 19 montre l'effet comparé des traitements, en cours de culture, soit cinq mois après le semis du piment.

**Tableau 19**

| Effet des traitements sur l'infestation du piment par *M. javanica* (Essai III, en cours de culture) | | | | |
|---|---|---|---|---|
| Critères évalués | Tm | S | Bio | M |
| IG | 1,2 ± 0,2 | 0,5 ± 0,1 | 0,3 ± 0,1 | 1,1 ± 0,3 |
| N/g rac | 225 ± 59 | 92 ± 41 | 10 ± 5 | 126 ± 104 |
| P.Ec/Pl | 6776 ± 2360 | 2486 ± 970 | 344 ± 175 | 3833 ± 1120 |

Dans les parcelles traitées au NOVI-BIOTEC-7996 (Bio), les plants de piment sont moins infestés par les nématodes (P.Ec/Pl) que dans les parcelles témoins (Tm) et dans celles traitées à l'ethoprophos (M) ou par la solarisation (S).

D'une façon générale, la réaction de la culture de piment, vis-à-vis des *Meloidogyne* spp., est différente de celle de la tomate. Cette plante-hôte, qui est plus tolérante que la tomate, présente, en effet, la caractéristique d'émettre de nouvelles racines secondaires au cours de son cycle cultural. Ces racines secondaires remplacent, au fur et à mesure, celles qui se dégradent, à la suite de diverses infestations de microorganismes phytoparasites et / ou phytopathogènes dans le sol.

Le tableau 20 montre l'incidence des différents traitements sur la culture de piment infesté par les nématodes, en fin de culture, soit après 9 mois du semis.

**Tableau 20**

| Efficacité du NOVI-BIOTEC-7996 (Bio) sur une culture de piment infestée par *M. javanica* (Essai III, fin de culture) | | | | |
|---|---|---|---|---|
| Critères évalués | Tm | S | Bio | M |
| P.Kg/m2 | 24,5 ± 2,0 | 29,8 ± 2,4 | 33,8 ± 0,6 | 26,6 ± 0,9 |
| IV | 2,8 ± 0,1 | 2,9 ± 0,1 | 3,1 ± 0,1 | 2,7 ± 0,2 |
| IG | 1,7 ± 0,1 | 1,0 ± 0,2 | 0,8 ± 0,2 | 1,7 ± 0,2 |
| % R inf | 11,6 ± 3,9 | 7,4 ± 1,9 | 4,8 ± 0,3 | 13,2 ± 2,2 |
| Pf/g rac | 187 ± 19 | 105 ± 15 | 34 ± 4 | 69 ± 17 |
| W/g rac | 130 ± 13 | 82 ± 37 | 26 ± 4 | 50 ± 3 |
| % M W | 23,5 ± 3,5 | 11,5 ± 4,0 | 49,0 ± 4,1 | 31,0 ± 3,0 |
| % Dia | 76,5 ± 4,6 | 88,5 ± 14,8 | 51,0 ± 11,5 | 69,0 ± 7,9 |
| L2/g rac | 55 ± 13 | 23 ± 8 | 8 ± 3 | 18 ± 3 |
| % M L2 | 25,9 ± 6,0 | 34,9 ± 4,5 | 54,5 ± 13,0 | 28,2 ± 11,5 |
| F/10g rac | 20 ± 5 | 8 ± 1 | 4 ± 1 | 10 ± 2 |
| W+L2/F | 93 ± 18 | 131 ± 82 | 85 ± 7 | 68 ± 12 |
| log Pf+1 | 4,21 ± 0,11 | 4,01 ± 0,17 | 3,55 ± 0,04 | 3,78 ± 0,09 |
| Pf/P.Ec | 3,7 ± 1,2 | 8,0 ± 4,1 | 0,9 ± 0,3 | 15,4 ± 3,2 |
| log Pv+1 | 3,71 ± 0,06 | 3,32 ± 0,16 | 2,55 ± 0,09 | 3,28 ± 0,09 |

Par rapport au témoin (Tm), le traitement biologique au NOVI-BIOTEC-7996 (Bio) se traduit par une amélioration d'environ 40% de la production du piment (P. Kg/m2). L'effet de la solarisation (S) et celui du traitement chimique à l'ethoprophos (M) sur la production du piment, ne sont pas, par contre, significatifs. L'ethoprophos liquide, appliqué tardivement en cours de culture; ne peut donc pas retarder l'infestation et protéger la culture.

Dans cet essai (III), les différences observées entre les différents traitements sont plus complexes, que celles observées entre les traitements dans l'essai I et II.

L'analyse statistique des différents critères, évalués en fin de culture (test non paramétrique de Friedman et la comparaison multiple des moyennes, basée sur la somme des rangs de Friedman) montre que la réaction de la culture de piment aux différents traitements (évaluée par les critères suivants: IV, IG et % R inf) est différente. Le NOVI-BIOTEC-7996 se distingue de la solarisation (S), du traitement chimique (M) et du témoin non traité (Tm). Quoique tous les traitements aient pu diminuer le taux d'infestation des racines (Pf/g rac, W/g rac, L2/g rac et F/10g rac), cette réduction est, cependant, plus importante dans le cas du traitement biologique (Bio). L' efficacité plus marquée du traitement biologique au NOVI-BIOTEC-7996 peut s'expliquer par l'effet significatif de ce produit sur la mortalité des oeufs et des larves (% M W et % M L2).

La population de nématodes par plant (log Pf+1) et le taux de multiplication de *Meloidogyne javanica*, dans le système radiculaire du piment (Pf/P.Ec) sont en outre plus faibles dans les parcelles traitées au NOVI-BIOTEC-7996 que dans les parcelles témoins (Tm) ou traitées (S et M).

A cause d'une plus faible compétition intraspécifique dans les racines du piment, la fécondité des femelles (W+L2/F) apparaît plus importante dans les parcelles traitées par la solarisation (S) et par le produit biologique (Bio). Mais l'inoculum potentiel vivant (log Pv+1), qui reste en fin de culture dans le sol des parcelles traitées au NOVI-BIOTEC-7996, est statistiquement plus faible par rapport à celui des autres traitements. En outre, dans les parcelles témoins (Tm), "solarisées" (S) et traitées à l'ethoprophos (M), le pourcentage des oeufs vivants non éclos (% Dia) est statistiquement plus important que celui évalué dans les parcelles traitées au NOVI-BIOTEC-7996 (Bio).

L'essai III a donc permis de montrer que le traitement au NOVI-BIOTEC-7996, appliqué deux mois après le semis d'une culture de piment, permet une protection efficace de cette culture d'extra-primeur, conduite sous serre chauffée en hors sol, meilleure que celle d'un traitement chimique.

Le NOVI-BIOTEC-7996 contribue, aussi, à une réduction significative du taux d'infestation du sol, contrairement aux traitements, physique (S) et chimique (M).

### 5.3.4 Efficacité du NOVI-BIOTEC-7996 sur une culture de melon d'extra-primeur infestée par les Meloidogyne (Essai IV)

L'essai IV a été réalisé sur une culture de melon d'extra-primeur-primeur, infestée par les *Meloidogyne* spp. conduite, en hors sol, sous une serre chauffée, dans les mêmes conditions expérimentales que les essais I, II, et III.

Cette culture, correspondant à l'hybride F1 "CALIPSO", qui est résistant au *Fusarium* races 0,1 et 2 et tolérant à l'*oidium*, mais sensible aux nématodes, elle occupe le sol sept mois. Le semis a été mis en place au mois de novembre dans les différentes parcelles expérimentales.

L'essai IV comporte quatre traitements répétés quatre fois dans des parcelles élémentaires de 13 m2 chacune, naturellement infestées par les nématodes du genre *Meloidogyne.*

Dans cet essai (IV) on a testé l'effet d'un traitement chimique à l'ethoprophos (M), appliqué en cours de culture (deux mois après le semis), à la dose de 5 ml par m2 et celui de deux traitements biologiques (Bio 1 et Bio 2), appliqués à la dose de 10 ml de suspension de matière active biologique par m2, un mois après le semis en place du melon.

Le traitement biologique (Bio 1) est constitué par l'association du NOVI-BIOTEC-7996 (4/5 en volume) et du bionématicide désigné "Chp" dans l'essai II (1/5 en volume). Le bionématicide "Chp", qui a fait l'objet de la demande de brevet INPI n° 95 15687, est constitué d'une suspension de propagules de champignons prédateurs et de leurs bactéries associées.

Le traitement (Bio 2) correspond au NOVI-BIOTEC-7996, appliqué seul, à la même dose et à la même date que le traitement biologique combiné (Bio 1).

Dans cet essai (IV), les critères d'évaluation des traitements, en cours et en fin de culture du melon, sont les mêmes que ceux des essais précédents (Essais I, II, III).

Le tableau 21 montre l'effet comparé des traitements, en cours de culture, soit cinq mois après le semis du melon.

Cette culture, très sensible aux *Meloidogyne* spp., montre une réaction très spectaculaire à l'infestation par ces nématodes.

En cours de culture (soit cinq mois après le semis du melon), le traitement au NOVI-BIOTEC-7996, en association avec le bionématicide, désigné "Chp" (Bio 1), montre l'effet le plus significatif, d'une part sur le développement des populations de nématodes dans les racines du melon (N/g rac, W/g rac, L2/g rac, F/10g rac et log P.Ec/Pl) et, d'autre part sur la réaction de la culture à l'infestation (IV et IG).

D'une façon générale, les deux traitements biologiques (Bio 1 et Bio 2) se distinguent nettement du traitement chimique (M) et du témoin (Tm).

La différence d'efficacité, observée en cours de culture, entre les traitements Bio 1 et Bio 2, s'explique par l'action nématicide combinée de l'association Bio 1 à la fois sur les larves et sur les oeufs des nématodes; alors que le traitement Bio 2 agit essentiellement sur les oeufs des nématodes.

La fécondité apparente des femelles (W+L2/F) est plus importante dans les parcelles traitées avec la combinaison du NOVI-BIOTEC-7996 et du bionématicide désigné "Chp" (Bio 1), par réaction à l'effet de ce traitement sur la réduction du taux d'infestation des racines en cours de culture (N/grac).

Le tableau 22 montre l'incidence des différents traitements sur la réaction du melon, ainsi que sur l'évolution de l'infestation en fin de culture, soit sept mois après le semis du melon. On peut noter, dans le cas particulier d'une culture sensible (le melon), suite à une dégradation plus ou moins précoce des racines, que le taux d'infestation du système radiculaire, évalué en cours de culture, amorce une diminution jusqu'à la fin de culture.

Le rapport P.Ec/Pf permet d'évaluer cette diminution relative de la population de nématodes dans les racines du melon, entre cinq (P.Ec) et sept (Pf) mois du semis.

**Tableau 21**

| Effet des traitements sur l'infestation du melon par les *Meloidogyne* (Essai IV, en cours de culture) | | | | |
|---|---|---|---|---|
| Critères évalués | Tm | M | Bio 1 | Bio 2 |
| IV | 2,6 ± 0,2 | 2,8 ± 0,2 | 3,1 ± 0,3 | 2,8 ± 0,2 |
| IG | 2,5 ± 0,6 | 2,5 ± 0,4 | 1,5 ± 0,5 | 2,2 ± 0,5 |
| N/g rac | 548 ± 177 | 828 ± 610 | 38 ± 26 | 260 ± 80 |
| W/g rac | 348 ± 101 | 488 ± 362 | 25 ± 17 | 261 ± 138 |
| L2/g rac | 200 ± 78 | 340 ± 247 | 13 ± 9 | 151 ± 88 |
| F/10g rac | 78 ± 37 | 75 ± 44 | 3 ± 2 | 71 ± 40 |
| W+L2/F | 131 ± 61 | 97 ± 19 | 177 ± 20 | 88 ± 23 |
| logP.Ec/P1 | 3,97 ± 0,14 | 3,75 ± 0,40 | 2,10 ± 0,7 | 3,39 ± 0,35 |

L'analyse statistique des données, évaluées en fin de culture (test non paramétrique de Friedman, et comparaison multiple des moyennes, basée sur la somme des rangs de Friedman) montre que le traitement chimique (M) et les deux traitements biologiques (Bio 1 et Bio 2), ont pu améliorer significativement la production du melon infesté par les nématodes. Le traitement au NOVI-BIOTEC-7996 (Bio 2) a permis une augmentation de plus de 40 % de la production du melon (P.Kg/m2) par rapport au témoin non traité (Tm).

**Tableau 22**

| Efficacité du NOVI-BIOTEC-7996 (Bio) sur une culture de melon infestée par *Meloidogyne* (Essai IV, fin de culture) | | | | |
|---|---|---|---|---|
| Critères évalués | Tm | M | Bio 1 | Bio 2 |
| P.Kg/m2 | 4,2 ± 0,3 | 4,9 ± 0,2 | 5,4 ± 0,5 | 5,9 ± 0,4 |
| IV | 2,0 ± 0,3 | 2,1 ± 0,2 | 2,1 ± 0,1 | 2,0 ± 0,1 |
| IG | 3,7 ± 0,2 | 3,0 ± 0,1 | 2,6 ± 0,2 | 2,1 ± 0,3 |
| % R inf | 77,3 ± 8,9 | 37,8 ± 10,1 | 41,8 ± 2,9 | 25,6 ± 6,7 |
| Pf/g rac | 37 ± 6 | 18 ± 4 | 20 ± 3 | 16 ± 3 |
| W/g rac | 17 ± 2 | 6 ± 3 | 8 ± 2 | 7 ± 2 |
| % M W | 40,9 ± 5,6 | 37,9 ± 9,2 | 56,9 ± 2,9 | 56,7 ± 0,4 |
| % Dia | 59,1 ± 13,9 | 62,1 ± 9,2 | 43,5 ± 7,4 | 43,3 ± 6,1 |
| L2/g rac | 18 ± 2 | 6 ± 1 | 11 ± 2 | 9 ± 3 |
| F/10g rac | 23 ± 6 | 21 ± 5 | 7 ± 1 | 4 ± 1 |
| log Pf+1 | 3,12 ± 0,95 | 2,50 ± 0,15 | 2,55 ± 0,54 | 2,17 ± 0,16 |
| P.Ec/Pf | 28,1 ± 16,9 | 90,7 ± 55,3 | 3,9 ± 2,3 | 150,2 ± 120 |
| log Pv+1 | 2,14 ± 0,08 | 2,11 ± 0,09 | 1,96 ± 0,10 | 1,78 ± 0,04 |

Tenant compte de la sensibilité de la culture de melon, l'indice de vigueur (IV), des plants dans les différentes parcelles expérimentales, est statistiquement comparables quel que soit le traitement. L'indice de galles (IG) et le pourcentage des racines infestées par plant (% R inf) sont par contre plus faibles dans les parcelles traitées avec les produits biologiques (Bio 1 et Bio 2), ce qui montre l'efficacité de ces produits dans la réduction de l'infestation potentielle de la culture par rapport au traitement chimique (M) et au témoin non traité (Tm).

Cette efficacité des traitements biologiques (Bio 1 et Bio 2), se confirme après analyse de l'évolution de l'infestation dans les racines de la culture de melon (Pf/g rac, W/g rac, L2/g rac, F/10g rac et log Pf+1).

Ces deux traitements biologiques (Bio 1 et Bio 2) se distinguent du témoin non traité (Tm) et du traitement chimique à l'ethoprophos (M), dans l'essai IV, par l'importance de la mortalité des oeufs (% M W), qui est induite par les agents biologiques testés, essentiellement par le NOVI-BIOTEC-7996.

Le traitement Bio 1, agissant à la fois sur les oeufs et les larves dans le sol, a réduit significativement le taux de multiplication des nématodes en cours de culture ( tableau 21 : N/g rac et log P.Ec/Pl). Le traitement biologique au NOVI-BIOTEC-7996 (Bio 2), a pu réduire l'inoculum potentiel par plant de 150 fois par rapport au témoin non traité (Tm), tout en protégeant efficacement la culture de melon.

En effet, le traitement biologique au NOVI-BIOTEC-7996 correspond au plus faible inoculum vivant de nématodes, évalué dans les racines (log Pv+1).

L'essai IV, réalisé sur une culture de melon infestée par les *Meloidogyne* spp., confirme incontestablement l'efficacité du traitement biologique au NOVI-BIOTEC-7996. Cet essai démontre que l'effet bénéfique, de l'association du NOVI-BIOTEC-7996 avec le bionématicide désigné "Chp", objet de la demande de brevet INPI n° 95 15687, n'est pas statistiquement supérieur à celui du NOVI-BIOTEC-7996 appliqué seul.

Dans la combinaison des deux bionématicides, tout se passe comme si on assiste à une compétition et/ou à un certain effet antagoniste entre les souches bactériennes du NOVI-BIOTEC-7996 et celles du bionématicide "Chp", appliqués en même temps dans les mêmes parcelles expérimentales.

Le traitement au NOVI-BIOTEC-7996 seul, est donc capable de protéger les cultures infestées par les *Meloidogyne* spp., tout en assurant une réduction spectaculaire du taux d'infestation du sol et des racines en fin de culture.

### 5.3.5 Efficacité du NOVI-BIOTEC-7996 sur une culture de tomate d'extra-primeur infestée par les Meloidogyne (Essai V).

L'essai V a été réalisé sur une culture de tomate (hybride F1; ELENA, F224) qui occupe le sol sept mois. La plantation de cette culture a été réalisée au mois d'octobre, sous serre chauffée, dans un sol lourd (plus de 15 % d'argile), fortement infesté par les nématodes (essentiellement, *M. javanica*).

Ce cultivar (ELENA) est normalement résistant aux *Meloidogyne,* mais étant donné, la fréquence, dans ce sol, de pathotypes virulents, capables de contourner les gènes de résistance, cet hybride F1 se comporte comme une variété sensible vis-à-vis des *Meloidogyne* spp.

L'objectif de l'essai V est de confirmer l'efficacité du NOVI-BIOTEC-7996 sur une culture de tomate, infestée par les *Meloidogyne*, conduite en plein sol, contrairement aux essais I, II, III et IV où les cultures sont plantées en hors sol.

L'essai V comporte ainsi trois traitements comparés à un témoin non traité (Tm), il s'agit:
- d'un traitement chimique (M) à l'ethoprophos, appliqué en cours de culture, trois mois après la plantation à la dose de 5ml au m2.
- d'un traitement physique (H2O), appliqué en préplantation au mois d'août, utilisant l'énergie d'origine géothermique. Le sol est ainsi traité à l'eau chaude, atteignant une température de 50°C, pendant plus de 12 heures.
- d'un traitement biologique (Bio) au NOVI-BIOTEC-7996, appliqué à la dose de 10 ml au m2, deux mois après la plantation.

L'essai V, réalisé chez un agriculteur privé, comporte donc quatre traitements répétés quatre fois, dans des parcelles élémentaires de 13 m2 chacune, naturellement infestées par les *Meloidogyne.*

Le tableau 23 montre l'effet comparé des différents traitements, en cours de culture, soit trois mois après la plantation de la culture de tomate.

**Tableau 23**

| Effet des traitements sur l'infestation d'une culture de tomate par les *Meloidogyne* (Essai V, en cours de culture) | | | | |
|---|---|---|---|---|
| Critères évalués | Tm | H2O | M | Bio |
| IG | 1,2 ± 0,5 | 0,5 ± 0,2 | 1,3 ± 0,5 | 1,4 ± 0,4 |
| N/g rac | 518 ± 496 | 53 ± 42 | 348 ± 266 | 158 ± 58 |
| log P.Ec/Pl | 2,52 ± 0,57 | 1,97 ± 0,41 | 2,64 ± 0,52 | 2,65 ± 0,69 |

A trois mois de la plantation, seul le traitement à l'eau chaude (H2O) a montré une réduction significative du taux d'infestation des racines de tomate. Le traitement biologique (Bio) ne se distingue pas, à ce moment, du témoin non traité (Tm).

Le tableau 24 présente les résultats après l'analyse statistique des données (Test non paramétrique de Friedman), évaluées, en fin de culture de l'essai v, sur une culture de tomate sous serre chauffée, dans un sol naturellement infesté par les *Meloidogyne* spp.

**Tableau 24**

| Efficacité du NOVI-BIOTEC-7996 (Bio) sur une culture de tomate infestée par *M. javanica* (Essai V, fin de culture) | | | | |
|---|---|---|---|---|
| Critères évalués | Tm | H2O | M | Bio |
| P.Kg/m2 | 21,1 ± 0,4 | 20,8 ± 0,7 | 21,2 ± 0,6 | 24,4 ± 0,6 |
| IV | 1,1 ± 0,1 | 1,3 ± 0,2 | 1,1 ± 0,1 | 2,1 ± 0,1 |
| IG | 4,3 ± 0,3 | 4,1 ± 0,2 | 3,7 ± 0,7 | 1,2 ± 0,1 |
| % R inf | 93,8 ± 3,8 | 85,2 ± 6,1 | 77,2 ± 10,1 | 15,6 ± 4,5 |
| Pf/g rac | 28145 ± 4490 | 5717 ± 2241 | 11225 ± 6534 | 525 ± 89 |
| w/g rac | 16193 ± 3200 | 4098 ± 2877 | 6365 ± 3577 | 276 ± 25 |
| % M W | 35,5 ± 5,1 | 39,7 ± 9,2 | 47,3 ± 0,6 | 70,0 ± 5,0 |
| % Dia | 64,5 ± 3,1 | 60,3 ± 4,7 | 52,7 ± 3,8 | 30,0 ± 2,6 |
| L2/g rac | 11750 ± 2750 | 1541 ± 907 | 4796 ± 3280 | 233 ± 59 |
| % M L2 | 48,3 ± 0,9 | 33,8 ± 5,1 | 57,7 ± 4,4 | 51,8 ± 6,4 |
| F/g rac | 100 ± 24 | 77 ± 33 | 63 ± 37 | 16 ± 3 |
| W+L2/F | 280 ± 29 | 76 ± 38 | 177 ± 64 | 33 ± 5 |
| log Pf+1 | 6,17 ± 0,16 | 5,26 ± 0,35 | 4,50 ± 0,59 | 3,54 ± 0,12 |
| Pf/P.Ec* | 92,7 ± 36,9 | 159,8 ± 128,7 | 6,1 ± 4,6 | 0,5 ± 0,4 |
| log Pv+1 | 5,65 ± 0,16 | 4,93 ± 0,35 | 4,03 ± 0,59 | 2,83 ± 0,11 |

| | | | | |
|---|---|---|---|---|
| *1/100 Pf/P.Ec par plant. | | | | |

La production par m2 (P.Kg/m2), l'indice de vigueur des plants (IV), l'indice de galles (IG) et le pourcentage des racines infestées (% Rinf) montrent que seul le traitement biologique au NOVI-BIOTEC-7996 a permis une protection efficace de la culture de tomate, en améliorant sa production de plus de 15 p.100.

Sans pour autant, pouvoir améliorer la production de la tomate par rapport du témoin non traité (Tm), les traitements, physique (H2O) et chimique (M), ont permis la réduction du taux d'infestation des racines (Pf/grac, W/g rac, F/g rac et log Pf+1). Seulement, cette réduction est beaucoup plus nette dans les parcelles traitées au NOVI-BIOTEC-7996 (Bio).

Si le pourcentage de mortalité des oeufs (% M W) est le plus élevé dans les parcelles traitées au NOVI-BIOTEC-7996 (Bio), celui des larves (% M L2) est, cependant, plus important dans celles traitées à l'ethoprophos (M).

Le pourcentage des oeufs vivants non éclos, dit en diapause (% Dia) est, de ce fait, plus faible dans les parcelles élémentaires traitées au NOVI -BIOTEC-7996 (Bio).

La plus faible fécondité apparente des femelles (W+L2/F) est associée, dans cet essai, au traitement biologique (Bio). l'inoculum vivant, qui reste dans les racines, en fin de la culture de tomate (log Pv+1), est, de ce fait, statistiquement le plus faible dans les parcelles traitées au NOVI-BIOTEC-7996. En effet, cet inoculum vivant ne représente que 19 p. 100 de la population finale dans les parcelles traitées au NOVI-BIOTEC-7996 (Bio), alors qu'il dépasse 30, 47, et 33 p. 100 respectivement, dans les parcelles témoins (Tm), traitées à l'eau chaude (H2O) et à l'ethoprophos (M).

L'essai V, confirme donc, encore une fois, non seulement l'efficacité du NOVI-BIOTEC-7996, appliqué dans la protection d'une culture sous serre conduite directement dans un sol naturellement infesté par les *Meloidogyne* spp, mais démontre, de façon évidente, la réduction hautement significative du taux d'infestation des racines en fin de culture, contrairement aux traitements, physique et chimique.

Au cours de plus d'une dizaine d'années d'expérimentation, "in vitro" et en pleins champs, aucune résistance naturelle et/ou induite à l'action ovicide des bactéries qui rentrent dans la composition du NOVI-BIOTEC-7996, n'a été décelée.

Le NOVI-BIOTEC-7996 présente donc une efficacité stable qui s'adapte pleinement aux programmes d'interventions intégrées contre divers groupes de nématodes.

## Revendications

1. Bionématicide vivant à action ovocide synergique, actif sur les stades de conservation de divers groupes de nématodes parasites et batériophages dans le sol, **caractérisé en ce qu'**il est composé d'au moins deux souches bactériennes compatibles, respectivement une souche de *Bacillus thuringiensis* et une souche de *Bacillus sphaericus*.

2. Bionématicide selon la revendication 1, **caractérisé en ce qu'**il est préférentiellement constitué de 20 à 50% de *Bacillus thuringiensis* et 50 à 80 % de *Bacillus sphaericus*.

3. Procédé de production du bionématicide selon la revendication 1, **caractérisé en ce qu'**elle est faite en masse de préférence en milieu liquide simple dans un fermenteur de plus ou moins grande capacité.

4. Procédé de préaparation selon la revendication 3, **caractérisé en ce qu'**il comporte les étapes suivantes :
- (i) production en masse sur un milieu liquide agité, à base d'extrait de *Cicer arietinum* (Légumineuse) et de saccharose ;
- (ii) lyophilisation de la suspension bactérienne obtenue après ou avant d'ajouter un mouillant et un support neutre ;
- (iii) conservation de l'extrait dans de l'huile de paraffine.

5. Procédé selon la revendication 4, **caractérisé en que** la température de la culture sur milieu liquide agité est de 8 à 48°C, de préférence entre 20 et 30°C et à un pH de 6 et 8, de préférence entre 6,0 et 7,5.

6. Procédé selon l'une des revendications 3 à 5, **caractérisé en ce que** sa biomasse sur culture liquide permet l'obtention d'au moins 0.5% d'extrait sec après lyophilisation.

7. Méthode d'application du bionématicide selon l'une des revendications 1 à 2, **caractérisée en ce que** la dose utilisée est de 10 à 20 ml de la suspension bactérienne (ou l'équivalent sous forme d'extrait sec), et **en ce que** le produit final peut être appliqué avant ou en cours de culture selon le degré d'infestation du sol traité.

## Claims

1. Living bionematicides with synergic ovicide action, which is active on preservation stages of various bacteriographage and parasitic nematode groups in the soil **characterized by** its composition of at least two compatible bacterian colonies, respectively Bacillus thuringiensis colonie and Bacillus sphaericus colonie.

2. Bionematicide according to claim 1, **characterized by** the fact that it is preferentially made up of 20 to 50% of Bacillus thuringiensis and 50 to 80 % of Bacillus sphaericus.

3. Process of production of bionematicide, according to claim 1, **characterized by** the fact that it is made up in mass, preferably in simple liquid medium in a more or less large capacity fermentor.

4. Process of preparation of bionematicide according to claim 3, **characterized by** the fact that it consists of the following stages
(i) Mass production in a shaken liquid medium, based on an extract of cicer arietinum (leguminous) and of saccharose ;
(ii) Freeze-drying of bacteria suspension obtained after or before addition of a damp product and a neutral load ;
(iii) Extract preservation in paraffin oil.

5. Process according to claim 4, **characterized by** the fact that the temperature of the culture on a shaken liquid medium is from 8 to 48°C, preferably between 20 and 30°C and a pH from 6 to 8, preferably from 6 to 7,5.

6. Process according to one of claims 3 to 5, **characterized by** the fact that its biomass on liquid culture permits the obtention of at least 0,5% of dry extract after freeze-drying.

7. Bionematicide application method according to one of claims 1 to 2, **characterized by** the fact that the used dose is from 10 to 20 ml of the bacterian suspension (or the equivalent in the form of a dry extract) and by the fact that the final product may be applied before or during the culture, according to the infestation degree of the treated soil.

## Patentansprüche

1. Lebendes Bionimatizd mit einer synergetischen ovozide Aktion, wirkend gegen unterschiedlichen Konservierungsstadien von unterschiedlichen, schmarotzerhaften und bakteriophage-Nematodengruppen im Boden, **dadurch gekennzeichnet daß** sie von mindestens zwei kompatiblen Bakterienwurzeln ist, jeweilig unter den Wurzeln von Bacillus Thuringiensis und Bacillus Sphaericus auserwählt.

2. Biomatizid nach der Anspruch 1, **dadurch gekennzeichnet, daß** es vorzüglich von 20 bis 50 % of Bacillus Thuringiensis und 50 bis 80 % von Bacillus Sphaericus eizeugt wird.

3. Herstellung von Bionimatizid nach der Anspruch 1 bei einer Massenproduktion am besten in einer einfachen flüssigen Umwelt und in einem Gärstoff von mehr oder weniger großer Kapazität.

4. Vorbereitungsverfahren des Bionimatizid nach der Anspruch 3, enthält nachstehenden Etappen :
(i) Massenproduktion in einer flüssigen, bewegten Umwelt aus einem Cicer arietinum (Hülsenfrüchte) und Saccharose ;
(ii) Lyophisierung der bakteriellen Verabreichung, die nach oder vor der Eingabe eines Einweichers und einer neutralen Gestaltung ;
(iii) Konservierung des Extraktes in Paraffinöl.

5. Vorbereitung nach der Anspruch 4, bezüglich der Temperatur des Anbaus in einem flüssigen, bewegten Umfeld beträgt 8 bis 48 °, am besten zwischen 20 und 30 °C, und bei einem Prozentsatz von 6 und 8, am besten zwischen 6,0 bis 7,5.

6. Verfahren nach der Ansprüche 3 bis 5, bezüglich seiner Biomasse auf Flüssiganbau ermöglicht, die Erhaltung von mindestens 0,5% trockener Extrakt nach Lyophilisierung.

7. Anwendungsmethode des Bionimatizid nach der Ansprüche 1 und 2, liegt die benutze Dosis von 10 bis 20 ml der bakteriellen Verabreichung (oder das gleichwertige als trockener Extrakt), das Endprodukt kann vor oder im Laufe des Anbaus, je nach Befallsquote des Bodens, benutzt werden.
